# EUROPEAN PATENT APPLICATION

(11) **EP 4 557 012 A1**
(43) Date of publication of application: **21.05.2025**
(21) Application number: 24212148.1
(22) Date of filing: 11.11.2024
(51) Int. Cl.: G03H 1/00, G03H 1/08, G03H 1/22, G03H 1/02, G03H 1/04

(54) **INCREASING INFORMATION RESULTING FROM APODIZATION**

(30) Priority: 15.11.2023 US 202318510047
(71) Applicant: FEI COMPANY, Hillsboro, OR 97124 (US)
(72) Inventor: Balashov, Konstantin, Hillsboro, OR, 97124 (US); Bahm, Alan S., Hillsboro, OR, 97124 (US)
(74) Representative: Stellbrink & Partner Patentanwälte mbB

(57) **Abstract**

Embodiments herein relate to apodization of a hologram. A system can comprise a memory that stores, and a processor that executes, computer executable components. The computer executable components can comprise an obtaining component that obtains a signal of an energy-based initial hologram, an expansion component that expands the initial hologram at a boundary of the initial hologram, resulting in an expanded hologram having an expanded portion at the boundary, and a filter application component that, based on the expanded hologram, applies an apodization filter to overlap the expanded portion of the expanded hologram.

## Description

### BACKGROUND

Scientific instruments for use in material analysis can aid in determining the makeup and properties of an unknown composition. In one or more examples, a scientific instrument can provide reconstruction in energy-based holograms to allow for better viewing of features of an unknown composition.

### BRIEF DESCRIPTION OF THE DRAWINGS

Embodiments will be readily understood by the following detailed description in conjunction with the accompanying drawings. To facilitate this description, like reference numerals designate like structural elements. Embodiments are illustrated by way of example, not by way of limitation, in the figures of the accompanying drawings.
FIG. 1 illustrates a block diagram of an example scientific instrument for performing operations, in accordance with one or more embodiments described herein.
FIG. 2 illustrates a flow diagram of an example method of performing operations using the scientific instrument of FIG. 1, in accordance with one or more embodiments described herein.
FIG. 3 illustrates a graphical user interface (GUI) that can be used in the performance of one or more of the methods described herein, in accordance with one or more embodiments described herein.
FIG. 4 illustrates a block diagram of an example computing device that can perform one or more of the methods disclosed herein, in accordance with one or more embodiments described herein.
FIG. 5 illustrates a block diagram of an example, non-limiting system that can facilitate apodization for reconstruction of a hologram, in accordance with one or more embodiments described herein.
FIG. 6 illustrates a block diagram of another example, non-limiting system that can facilitate apodization for reconstruction of a hologram, in accordance with one or more embodiments described herein.
FIG. 7 provides a schematic illustration of one or more processes performed by the material analysis system of FIG. 6, in accordance with one or more embodiments described herein.
FIG. 8A provides a schematic illustration of an expanded hologram that can be generated by the material analysis system of FIG. 6, in accordance with one or more embodiments described herein.
FIG. 8B provides a set of schematic illustrations of exemplary apodization filters that can be generated and/or applied by the material analysis system of FIG. 6, in accordance with one or more embodiments described herein.
FIG. 8C provides a schematic illustration of an exemplary apodization filter that can be generated and/or applied by the material analysis system of FIG. 6, in accordance with one or more embodiments described herein.
FIG. 8D provides a pair of illustrations of exemplary apodization filters that can be generated by the material analysis system of FIG. 6, in accordance with one or more embodiments described herein.
FIG. 8E provides an illustration of a reconstructed image that can be generated by the material analysis system of FIG. 6, in accordance with one or more embodiments described herein.
FIG. 9 illustrates reconstructed image based on different apodization filters applied to a same target composition, in accordance with one or more embodiments described herein.
FIG. 11 illustrates a flow diagram of one or more processes that can be performed by the material analysis system of FIG. 6, in accordance with one or more embodiments described herein.
FIG. 12 illustrates a continuation of the flow diagram of FIG. 11 of one or more processes that can be performed by the material analysis system of FIG. 6, in accordance with one or more embodiments described herein.
FIG. 13 illustrates a block diagram of example scientific instrument system in which one or more of the methods described herein can be performed, in accordance with one or more embodiments described herein.
FIG. 14 illustrates a block diagram of an example operating environment into which embodiments of the subject matter described herein can be incorporated.
FIG. 15 illustrates an example schematic block diagram of a computing environment with which the subject matter described herein can interact and/or be implemented at least in part.

### SUMMARY

The following presents a summary to provide a basic understanding of one or more embodiments described herein. This summary is not intended to identify key or critical elements, and/or to delineate scope of particular embodiments or scope of claims. Its sole purpose is to present concepts in a simplified form as a prelude to the more detailed description that is presented later. In one or more embodiments, systems, computer-implemented methods, apparatuses and/or computer program products described herein can provide a process to generate and/or apply an apodization filter to achieve reconstruction of an image based on a hologram resulting from a hologram process, such as an electron energy hologram process (e.g., from application of an energy source to a target composition).

In accordance with an embodiment, a system can comprise a memory that stores computer executable components, and a processor that executes the computer executable components. The computer executable components can comprise an obtaining component that obtains a signal of an energy-based initial hologram, an expansion component that expands the initial hologram at a boundary of the initial hologram, resulting in an expanded hologram having an expanded portion at the boundary, and a filter application component that, based on the expanded hologram, applies an apodization filter to overlap the expanded portion of the expanded hologram.

In accordance with another embodiment, a computer-implemented method can comprise obtaining, by a system operatively coupled to a processor, a signal of an energy-based initial hologram, expanding, by the system, the initial hologram at a boundary of the initial hologram, resulting in an expanded hologram having an expanded portion at the boundary, and based on the expanded hologram, applying an apodization filter to overlap the expanded portion of the expanded hologram.

In accordance with still another embodiment, a computer program product facilitates a process for apodization of a hologram, the program instructions executable by a processor to cause the processor to obtain, by the processor, a signal of an energy-based initial hologram, expand, by the processor, the initial hologram at a boundary of the initial hologram, resulting in an expanded hologram having an expanded portion at the boundary, and based on the expanded hologram, apply, by the processor, an apodization filter to overlap the expanded portion of the expanded hologram.

The one or more embodiments disclosed herein can achieve improved performance relative to existing approaches. For example, based on application of an apodization filter to an expanded portion of an expanded hologram external to (e.g., outward of) an internal area of the initial hologram resulting from an obtained signal, reduction in artifacts at reconstruction of an object image from the expanded hologram can be provided. That is, use of the apodization filter at the expanded portion can allow for artifacts from the initial hologram (e.g., internal area) to propagate into the expanded portion, rather than reflecting of a boundary of the initial hologram and back into the internal area. Accordingly, edges of an object image, corresponding to the initial hologram (internal area), can be reconstructed with reduced presence of artifacts as compared to use of existing frameworks. That is, use of the apodization filter as described herein can result in reduction in signal loss (e.g., relative to a signal defining the initial hologram).

In one or more embodiments described herein, use of blurring to the initial hologram area (e.g., internal area of the expanded hologram), in addition to use of the apodization filter, can result in reduction of ringing-type artifacts at the object image upon reconstruction of the object image from the expanded and apodized hologram.

Moreover, one or more embodiments described herein can beneficially provide focus/direction for plural targets at least partially in parallel with one another. For example, holograms from two or more targets being acted on by two or more different energy sources can be apodized at least partially in parallel with one another.

Further, the embodiments described herein can be adapted to work with non-square detectors, detectors with broken pixels, combined holograms (e.g., resulting from holograms taken relative to shifted sampling, or holograms having limited or patchy illumination).

### DETAILED DESCRIPTION

The following detailed description is merely illustrative and is not intended to limit embodiments and/or application or utilization of embodiments. Furthermore, there is no intention to be bound by any expressed or implied information presented in the preceding Summary section, or in the Detailed Description section. One or more embodiments are now described with reference to the drawings, wherein like reference numerals are utilized to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

Various operations can be described as multiple discrete actions or operations in turn, in a manner that is most helpful in understanding the subject matter disclosed herein. However, the order of description should not be construed as to imply that these operations are necessarily order dependent. In particular, these operations can be performed in an order different from the order of presentation. Operations described can be performed in a different order from the described embodiment. Various additional operations can be performed, and/or described operations can be omitted in additional embodiments.

Turning now to the subject of material analysis and to the one or more embodiments described herein, one method of obtaining composition imaging can be electron imaging where a target composition is targeted by an energy source, ultimately resulting in a signal that can be employed to generate an energy-based hologram, such as an in-line electron hologram or for in-line holography by other waves and particles such as light (EM wave), sound (pressure wave) and/or neutron and/or proton waves (matter waves). That is, the embodiments described herein are applicable to different types of holograms, including in-line holograms, electron energy holograms and/or other types of holograms.

From the hologram, a reconstructed image of the target composition can be reconstructed. The reconstruction can employ back propagation, among other methods. That is, reconstruction in holograms, such as low energy electron holograms (LEEH), can employ wave propagation techniques of Fourier optics. Holograms are measured by a detector with finite number of pixels (e.g. 512x512). To avoid Gibbs phenomena (ringing of sharp transitions/step functions in wave propagation), some sort of apodization often can be used. Apodization can be performed by placing a window that spatially gradually smooths the detected signal to zero (or an average value). This form of apodization then, necessarily throws away information in the detected hologram, as it is overlayed on top of the hologram.

As used herein, apodization refers to a technique used in various fields, including optics, signal processing, and spectroscopy, to modify the shape and/or intensity profile of a waveform or signal. For example, relative to spectroscopy, apodization can be employed to modify the shape of one or more spectral lines in a spectrum. By applying apodization functions to the data before Fourier transformation, resolution and accuracy of spectroscopic measurements can be improved.

For another example, relative to signal processing, apodization can be employed to modify or shape a frequency response of a signal. A window function, such as a filter used herein, can be employed to taper edges of a signal to reduce spectral leakage in Fourier analysis. This apodization can improve accuracy of spectral analysis and reduce unwanted side lobes in a frequency domain.

With in-line holography, the highest resolution information can be recorded at the farthest points off-axis (e.g., the points most outward at the edges of a hologram). Put another way, the widest scattered information from an object can hold the highest resolution information. This can make the choice of apodization particularly important for retaining as much information as possible during reconstruction. As used herein, the term "off-axis" refers to being spaced from the central axis of the beam containing the reference wave.

One existing apodization approach can be to use a circular apodization filter generated using a cosine profile. However, information contained at corners and outer edges of the hologram also can contain part of the signal from the target composition. Thus, when using a detector on the hologram, no such information from the corners or outer edges will be retained and/or reconstructed.

To account for one or more inabilities and/or deficiencies of existing frameworks (e.g., existing apodization frameworks), one or more embodiments are described herein that can employ a unique apodization framework to achieve high information gathering from a signal resulting from application of an energy stream to a target composition. The apodization framework can comprise modification of the hologram, such as by extrapolation, resulting in an expanded hologram, and application of a shaped apodization filter during hologram detection.

Modification of the hologram can comprise generation and use of an expanded hologram. That is an expanded portion of a hologram can be generated bounding at least a portion of the initial hologram formed from the application of the energy stream to the target composition.

Then, in connection with detection of the expanded hologram (e.g., of the signal defining the expanded hologram), an apodization filter can be applied to at least the expanded portion of the hologram.

As a result, a desired increase in information obtained from an image reconstructed from the expanded hologram can be obtained, as compared to existing apodization framework. This increase in information can be at least partially due to reduction of artifacts, such as Gibbs phenomena (e.g., ringing artifacts), which can be generated during hologram generation and/or during reconstruction.

Discussion next turns to a general discussion of one or more scientific instrument systems disclosed herein, as well as related methods, computing devices, and computer-readable media. For example, in one or more embodiments, a system can comprise a memory that stores computer executable components and a processor that executes the computer executable components stored in the memory. The computer executable components comprise an obtaining component that obtains a signal of an energy-based hologram, an expansion component that expands at least a portion of an initial hologram, and a filter application component that, based on the expanded hologram, applies an apodization filter to at least an expanded portion of the expanded hologram.

The one or more embodiments disclosed herein can achieve improved performance relative to existing approaches. For example, based on application of an apodization filter to an expanded portion of a hologram external to (e.g., outward of) an internal portion resulting from an obtained signal, reduction in artifacts (e.g., ghost artifacts and/or wave artifacts) in connection with reconstruction of an object image from the hologram can be provided. That is, use of the apodization filter at the expanded portion can allow for increase of information being used to generate the reconstructed object image.

Moreover, an embodiment described herein can beneficially provide focus/direction for plural targets at least partially in parallel with one another. For example, holograms from two or more targets being acted on by two or more different energy sources can be smoothed at least partially in parallel with one another.

Further, the embodiments described herein can be adapted to work with non-square detectors, detectors with broken pixels, combined holograms (e.g., resulting from holograms taken relative to shifted sampling, and/or holograms having limited or patchy illumination.

The embodiments disclosed herein thus can provide improvements to scientific instrument technology (e.g., improvements in the computer technology supporting such scientific instruments, among other improvements), which can be employed in various fields including optics, signal processing, spectroscopy, and nuclear magnetic resonance (NMR), without being limited thereto.

Various ones of the embodiments disclosed herein can improve upon existing approaches to achieve the technical advantages of high information reconstructions and/or low artifact generation in such reconstructions. That is, use of the apodization framework provided herein can greatly reduce artifact generation at edge locations of a reconstructed object image based on an initial hologram. In addition, use of blurring of one or more aspects of the initial hologram can result in reduced artifacts, such as ringing artifacts, at internal portions of the resulting reconstructed object image.

As used herein, the term "object image" can refer to any image of any one or more objects, backgrounds, environments, targets, materials and/or the like.

Such technical advantages are not achievable by routine and/or existing approaches, and all user entities of systems including such embodiments can benefit from these advantages (e.g., by assisting the user entity in the performance of a technical task, such as identification of one or more target compositions, by means of an image reconstruction using an apodization framework discussed herein).

The technical features of the embodiments disclosed herein (e.g., modification of the hologram and subsequent filtering and/or apodization process applied to the modified hologram) are thus decidedly unconventional in the field of material analysis, in addition to the fields of optics, signal processing, spectroscopy, and/or NMR, without being limited thereto, as are combinations of the features of the embodiments disclosed herein.

As discussed further herein, various aspects of the embodiments disclosed herein can improve the functionality of a computer itself. That is, the computational and user interface features disclosed herein do not involve only the collection and comparison of information but instead apply new analytical and technical techniques to change the operation of the computer-analysis of material compounds. For example, based on the signal obtained from an energy stream interacting with a target composition, an expanded hologram can be generated subject to apodization filtering defined herein. Based at least on these processes, a subsequent computer-directed process of image reconstructions can be made easier and more efficient through reduction of generation of artifacts, such as Gibbs phenomena, during the image reconstructions, which reduction is a result of the earlier computer-directed processes of hologram modification and apodization. As such, a non-limiting system described herein, comprising a material analysis system, can be self-improving.

The present disclosure thus introduces functionality that neither an existing computing device, nor a human, could perform. Rather, such existing computing devices would instead maintain Gibbs phenomena generation at a non-filtered boundary area of an initial hologram, resulting in loss or degeneration of signal corresponding to those areas of the initial hologram (e.g., loss of data relative thereto). In view of the time, energy and/or loss of data involved, it is not practical to operate within the confines of existing approaches.

Accordingly, the embodiments of the present disclosure can serve any of a number of technical purposes, such as controlling a specific technical system or process; determining from measurements how to control a machine; digital audio, image, or video enhancement or analysis; separation of material sources in a mixed signal; generating data for reliable and/or efficient transmission or storage; providing estimates and confidence intervals for material samples; or providing a faster processing of sensor data. In particular, the present disclosure provides technical solutions to technical problems, including, but not limited to, hologram modification; apodization filter generation; apodization filter application; and/or subsequent image reconstruction, resulting in a faster, more thorough and/or more efficient processing of material samples.

The embodiments disclosed herein thus provide improvements to material analysis technology (e.g., improvements in the computer technology supporting material analysis, among other improvements).

As used herein, the phrase "based on" should be understood to mean "based at least in part on," unless otherwise specified.

As used herein, the term "component" can refer to an atomic element, molecular element, phase of an atomic or molecular element, or combination thereof.

As used herein, the term "data" can comprise metadata.

As used herein, the terms "entity," "requesting entity," and "user entity" can refer to a machine, device, component, hardware, software, smart device, party, organization, individual and/or human.

One or more embodiments are now described with reference to the drawings, where like referenced numerals are used to refer to like drawing elements throughout. In the following description, for purposes of explanation, numerous specific details are set forth in order to provide a more thorough understanding of the one or more embodiments. It is evident in various cases, however, that the one or more embodiments can be practiced without these specific details.

Further, it should be appreciated that the embodiments depicted in one or more figures described herein are for illustration only, and as such, the architecture of embodiments is not limited to the systems, devices and/or components depicted therein, nor to any particular order, connection and/or coupling of systems, devices and/or components depicted therein.

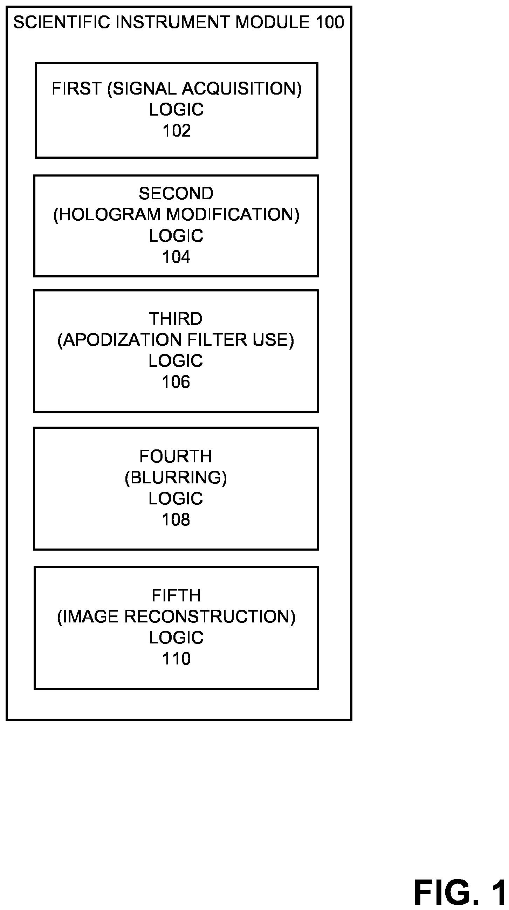

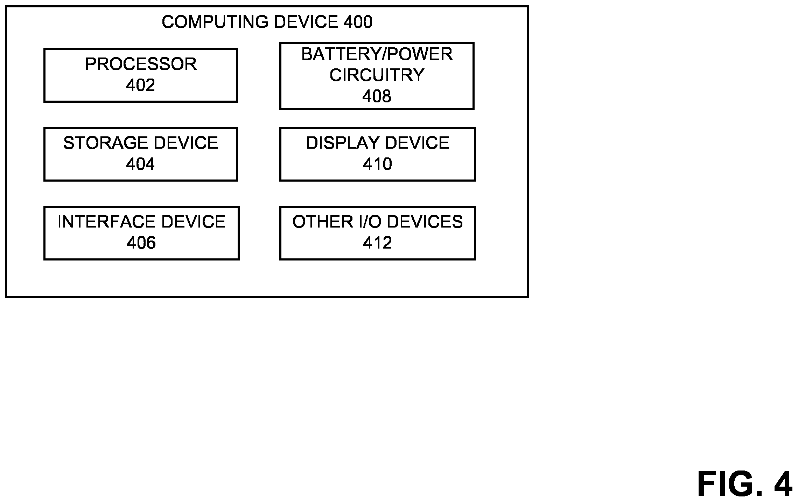

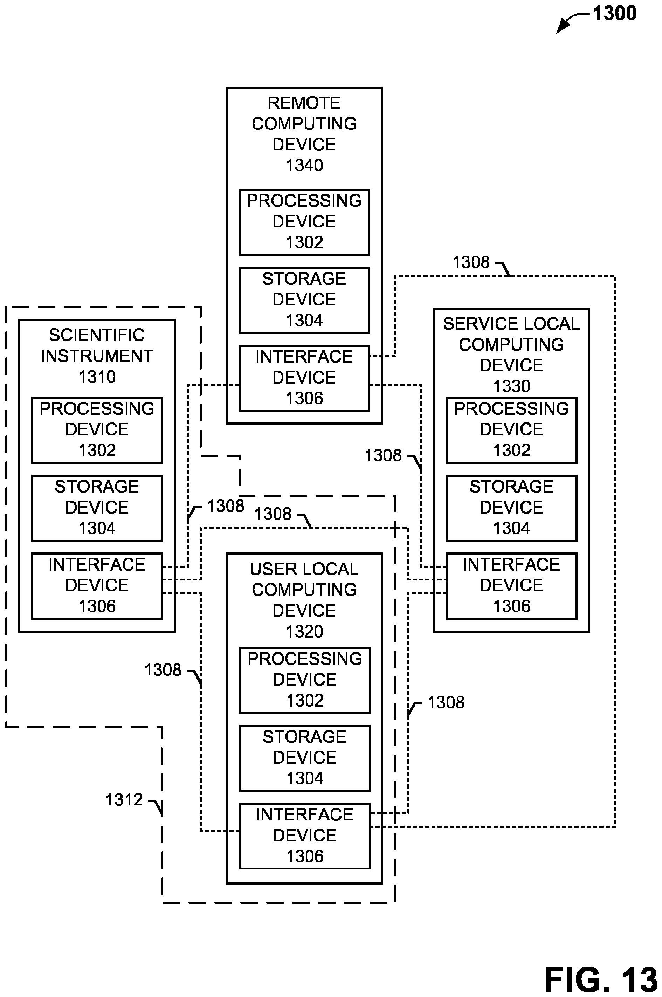

Turning now in particular to the one or more figures, and first to FIG. 1, illustrated is a block diagram of a scientific instrument module 100 for performing material analysis operations using an apodization technique, in accordance with various embodiments described herein. The scientific instrument module 100 can be implemented by circuitry (e.g., including electrical and/or optical components), such as a programmed computing device. The logic of the scientific instrument module 100 can be included in a single computing device or can be distributed across multiple computing devices that are in communication with each other as appropriate. Examples of computing devices that can, singly or in combination, implement the scientific instrument module 100 are discussed herein with reference to the computing device 400 of FIG. 4, and examples of systems of interconnected computing devices, in which the scientific instrument module 100 can be implemented across one or more of the computing devices, is discussed herein with reference to the scientific instrument system 1300 of FIG. 13.

The scientific instrument module 100 can include first logic 102, second logic 104, third logic 106, fourth logic 108 and fifth logic 110. As used herein, the term "logic" can include an apparatus that is to perform a set of operations associated with the logic. For example, any of the logic elements included in the module 100 can be implemented by one or more computing devices programmed with instructions to cause one or more processing devices of the computing devices to perform the associated set of operations. In a particular embodiment, a logic element can include one or more non-transitory computer-readable media having instructions thereon that, when executed by one or more processing devices of one or more computing devices, cause the one or more computing devices to perform the associated set of operations. As used herein, the term "module" can refer to a collection of one or more logic elements that, together, perform a function associated with the module. Different ones of the logic elements in a module can take the same form or can take different forms. For example, some logic in a module can be implemented by a programmed general-purpose processing device, while other logic in a module can be implemented by an application-specific integrated circuit (ASIC). In another example, different ones of the logic elements in a module can be associated with different sets of instructions executed by one or more processing devices. A module can omit one or more of the logic elements depicted in the associated drawing; for example, a module can include a subset of the logic elements depicted in the associated drawing when that module is to perform a subset of the operations discussed herein with reference to that module.

The first logic 102 can receive, find, locate and/or otherwise obtain a signal corresponding to an energy-based hologram (e.g., resulting from electron input to a target composition).That is, the first logic 102 can obtain data for use in generating a reconstructed image of a target, such as a target composition.

The second logic 104 can generate an expanded hologram based on the initial hologram (e.g., the energy-based hologram). That is, the second logic 104 can generate an expanded portion beyond a boundary of the initial hologram.

The third logic 106 can generate an apodization filter for use in filtering of the expanded hologram and can apply the apodization filter at least to the expanded portion of the expanded hologram. That is, the third logic 106 can, based on the signal obtained by the first logic 102, and based on the expanded hologram generated by the second logic 104, generate and apply the apodization filter.

The fourth logic 108 can blur one or more internal portions of the expanded hologram (e.g., corresponding to the initial hologram, which is the non-expanded portion) generated by the second logic 104. That is, the fourth logic 108 can apply the filter before reconstruction of the image.

The fifth logic 110 can perform the reconstruction of the image of the target, based on a modified signal output from a result of use of the apodization filter and/or use of the blurring by the third logic 106 and the fourth logic 108, respectively.

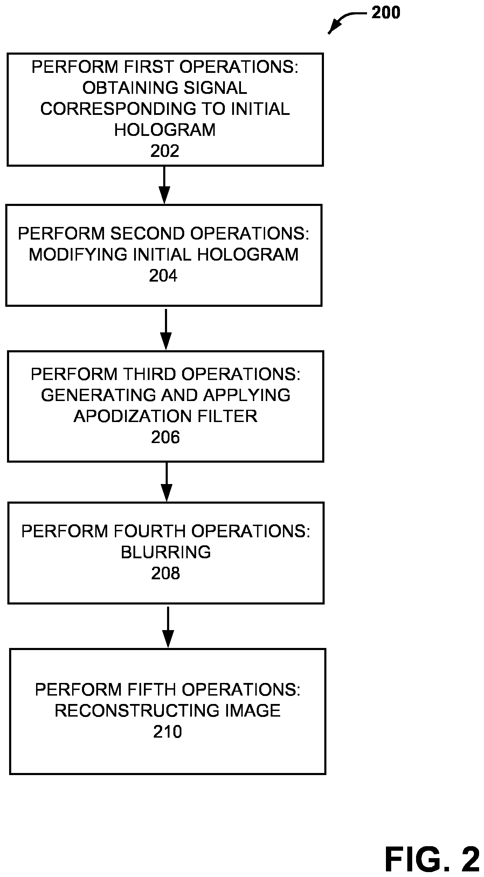

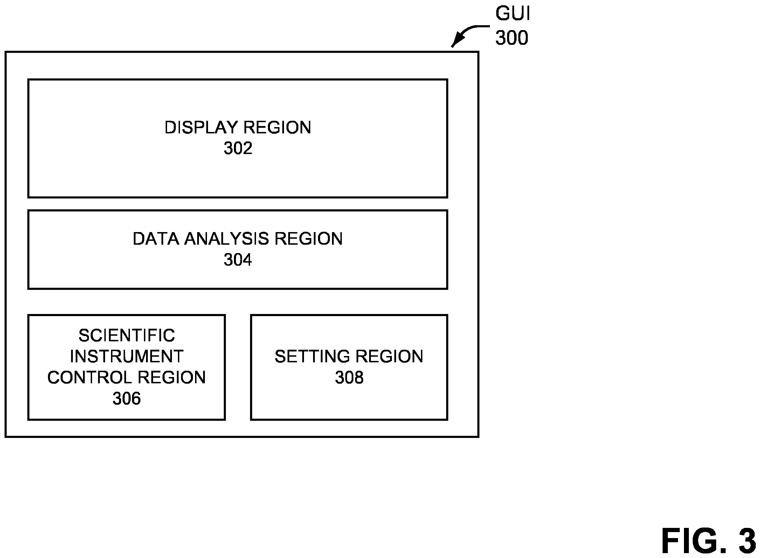

FIG. 2 illustrates a flow diagram of a method 200 of performing operations, by the scientific instrument module 100, in accordance with various embodiments. Although the operations of the method 200 can be illustrated with reference to particular embodiments disclosed herein (e.g., the scientific instrument module 100 discussed herein with reference to FIG. 1, the GUI 300 discussed herein with reference to FIG. 3, the computing device 400 discussed herein with reference to FIG. 4, and/or the scientific instrument system 1300 discussed herein with reference to FIG. 13), the method 200 can be used in any suitable setting to perform any suitable operations. Operations are illustrated once each and in a particular order in FIG. 2, but the operations can be reordered and/or repeated as desired and appropriate (e.g., different operations performed can be performed in parallel, as suitable).

At 202, first operations can be performed. For example, the first logic 102 of the module 100 can perform the first operations 202. The first operations 202 can include obtaining a signal corresponding to an energy-based hologram (e.g., resulting from electron input to a target composition).

At 204, second operations can be performed. For example, the second logic 104 of the module 100 can perform the second operations 204. The second operations 204 can include generating an expanded hologram based on the initial hologram (e.g., expanding the initial hologram into an expanded hologram).

At 206, third operations can be performed. For example, the third logic 106 of the module 100 can perform the third operations 206. The third operations 206 can include generating an apodization filter for use in filtering the expanded hologram and applying the apodization filter at least to the expanded portion of the expanded hologram.

At 208, fourth operations can be performed. For example, the fourth logic 108 of the module 100 can perform the fourth operations 208. The fourth operations 208 can include blurring an internal portion of the expanded hologram, where the internal portion corresponds to the initial hologram.

At 210, fifth operations can be performed. For example, the fifth logic 110 of the module 100 can perform the fifth operations 210. The fifth operations 210 can include executing a reconstruction of an object image based at least on the third logic 106, but which also can be based on the fourth logic 108. That is, the fifth operations 210 can include reconstructing the image of a target (e.g., target 550).

The scientific instrument methods disclosed herein can include interactions with a user entity (e.g., via the user local computing device 1320 discussed herein with reference to FIG. 13). These interactions can include providing information to the user entity (e.g., information regarding the operation of a scientific instrument such as the scientific instrument 1310 of FIG. 13, information regarding a sample being analyzed or other test or measurement performed by a scientific instrument, information retrieved from a local or remote database, or other information) or providing an option for a user entity to input commands (e.g., to control the operation of a scientific instrument such as the scientific instrument 1310 of FIG. 13, or to control the analysis of data generated by a scientific instrument), queries (e.g., to a local or remote database), or other information. In some embodiments, these interactions can be performed through a graphical user interface (GUI) that includes a visual display on a display device (e.g., the display device 410 discussed herein with reference to FIG. 4) that provides outputs to the user entity and/or prompts the user entity to provide inputs (e.g., via one or more input devices, such as a keyboard, mouse, trackpad, or touchscreen, included in the other I/O devices 412 discussed herein with reference to FIG. 4). The scientific instrument system 1300 disclosed herein can include any suitable GUIs for interaction with a user entity.

Turning next to FIG. 3, depicted is an example GUI 300 that can be used in the performance of one or more of the methods described herein, in accordance with various embodiments described herein. As noted above, the GUI 300 can be provided on a display device (e.g., the display device 410 discussed herein with reference to FIG. 4) of a computing device (e.g., the computing device 400 discussed herein with reference to FIG. 4) of a scientific instrument system (e.g., the scientific instrument system 1300 discussed herein with reference to FIG. 13), and a user entity can interact with the GUI 300 using any suitable input device (e.g., any of the input devices included in the other I/O devices 412 discussed herein with reference to FIG. 4) and input technique (e.g., movement of a cursor, motion capture, facial recognition, gesture detection, voice recognition, actuation of buttons, etc.).

The GUI 300 can include a data display region 302, a data analysis region 304, a scientific instrument control region 306, and a settings region 308. The particular number and arrangement of regions depicted in FIG. 3 is merely illustrative, and any number and arrangement of regions, including any desired features thereof, can be included in a GUI 300.

The data display region 302 can display data generated by a scientific instrument (e.g., the scientific instrument 1310 discussed herein with reference to FIG. 13). For example, the data display region 302 can display one or more output results which can comprise text, graphs, charts, matrices and/or spectra, without being limited thereto.

The data analysis region 304 can display the results of data analysis (e.g., the results of analyzing the data illustrated in the data display region 302 and/or other data). For example, the data analysis region 304 can display one or more of the output results. In one or more cases, the data analysis region 304 can display a list, flow chart or other schematic of acquisition actions taken and/or recommended relative to an experiment. In one or more embodiments, the data display region 302 and the data analysis region 304 can be combined in the GUI 300 (e.g., to include data output from a scientific instrument, and some analysis of the data, in a common graph or region).

The scientific instrument control region 306 can include options that allow the user entity to control a scientific instrument (e.g., the scientific instrument 1310 discussed herein with reference to FIG. 13). For example, the scientific instrument control region 306 can include one or more controls for inputting one or more metrics of interest.

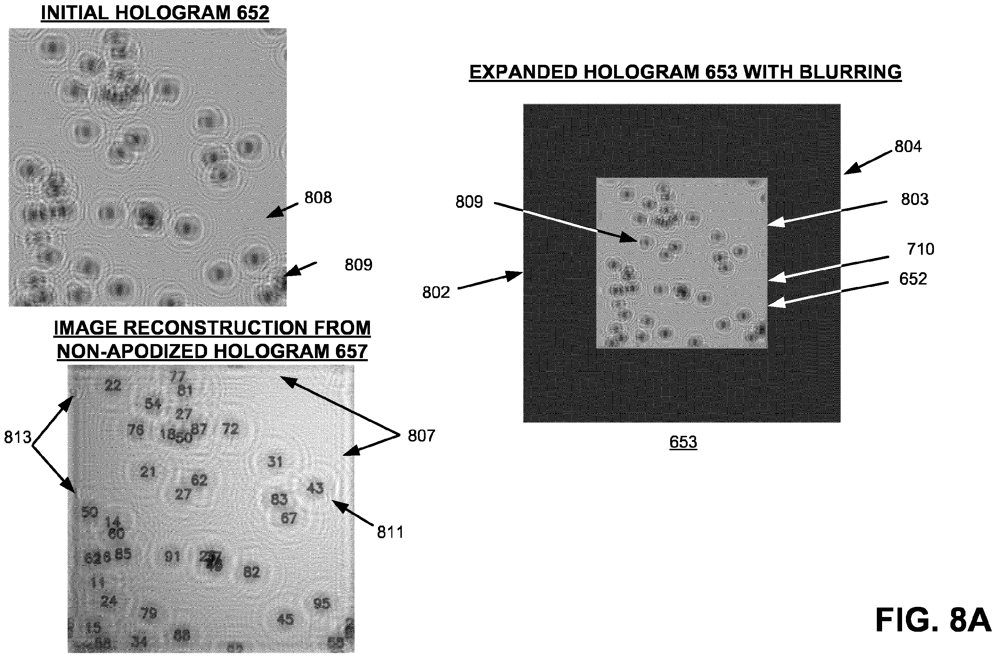

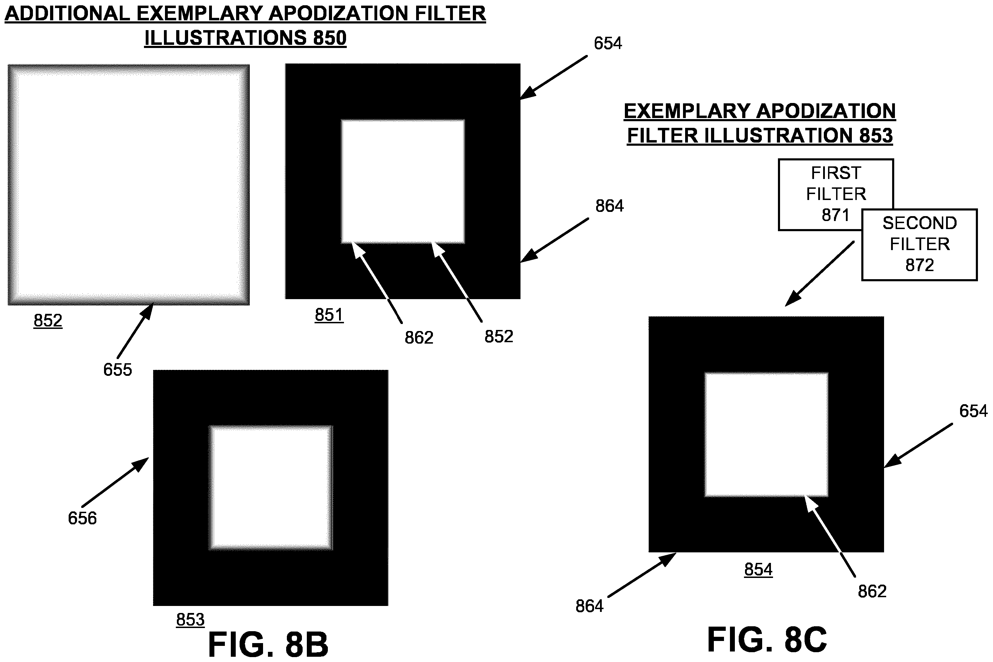

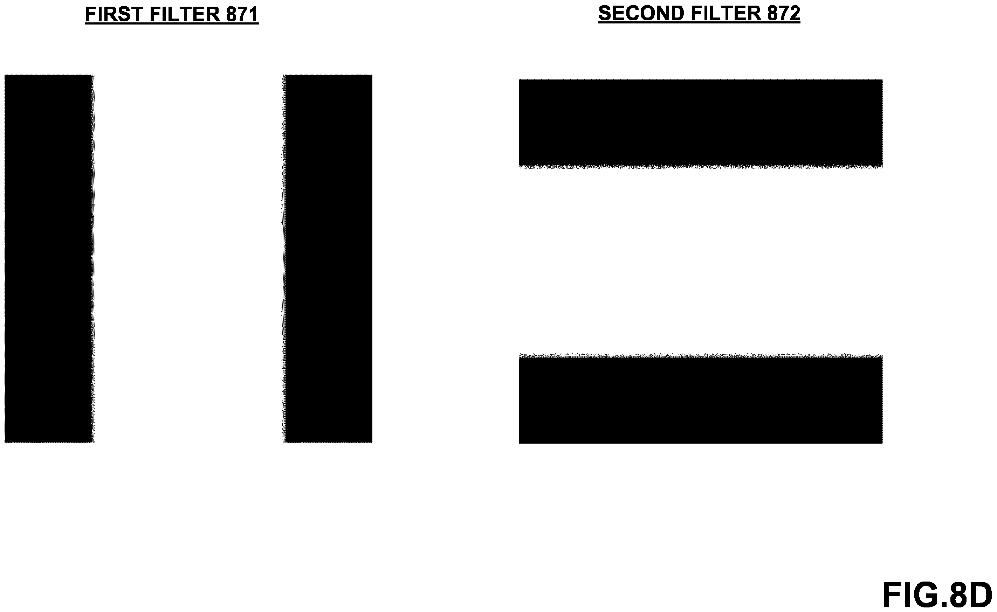

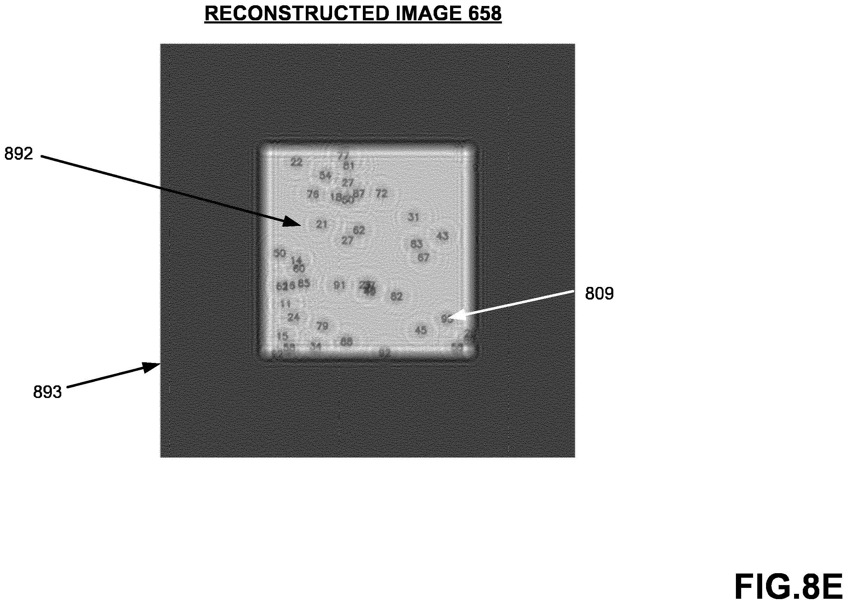

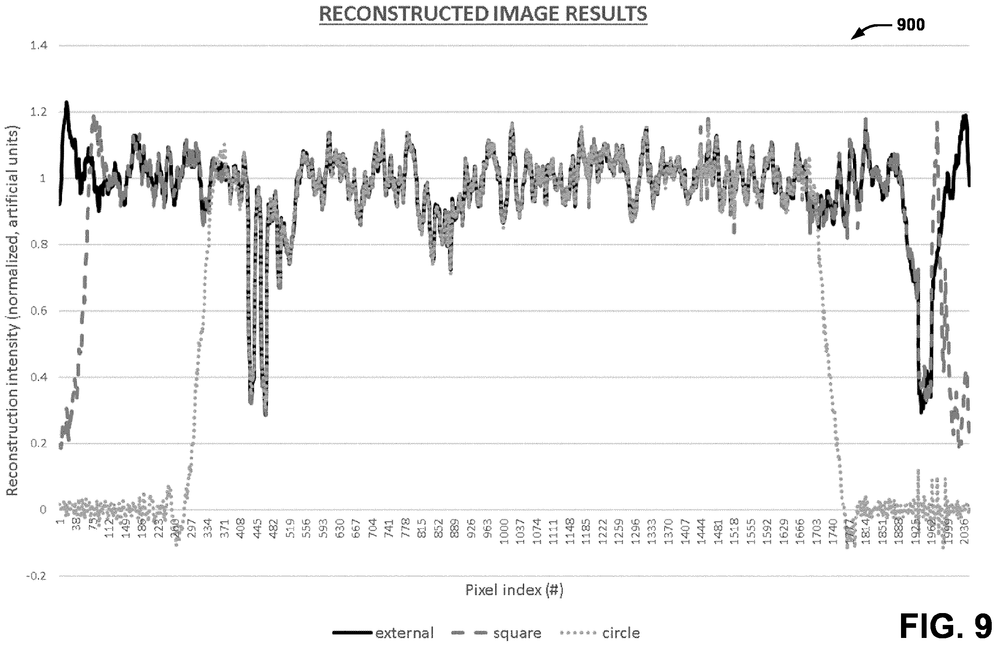

The settings region 308 can include options that allow the user entity to control the features and functions of the GUI 300 (and/or other GUIs) and/or perform common computing operations with respect to the data display region 302 and data analysis region 304 (e.g., saving data on a storage device, such as the storage device 404 discussed herein with reference to FIG. 4, sending data to another user entity, labeling data, etc.). For example, the settings region 308 can include one or more options to alter color, fill or format of illustrations, such as an illustration of FIG. 8 or FIG. 9.

As noted above, the scientific instrument module 100 can be implemented by one or more computing devices. Accordingly, discussion next turns to FIG. 4, which illustrates a block diagram of a computing device 400 that can perform some or all of the scientific instrument methods disclosed herein, in accordance with various embodiments. In one or more embodiments, the scientific instrument module 100 can be implemented by a single computing device 400 or by multiple computing devices 400. Further, as discussed below, a computing device 400 (or multiple computing devices 400) that implements the scientific instrument module 100 can be part of one or more of the scientific instrument 1310, the user local computing device 1320, the service local computing device 1330, or the remote computing device 1340 of FIG. 13.

The computing device 400 of FIG. 4 is illustrated as having a number of components, but any one or more of these components can be omitted or duplicated, as suitable for the application and setting. As illustrated, these components can include one or more of a processor 402, storage device 404, interface device 406, battery/power circuitry 408, display device 410 and other input/output (I/O) devices 412, as will be described below.

In one or more embodiments, one or more of the components included in the computing device 400 can be attached to one or more motherboards and enclosed in a housing (e.g., including plastic, metal, and/or other materials). In one or more embodiments, some these components can be fabricated onto a single system-on-a-chip (SoC) (e.g., an SoC can include one or more processors 402 and one or more storage devices 404). Additionally, in one or more embodiments, the computing device 400 can omit one or more of the components illustrated in FIG. 4. In one or more embodiments, the computing device 400 can include interface circuitry (not shown) for coupling to the one or more components using any suitable interface (e.g., a Universal Serial Bus (USB) interface, a High-Definition Multimedia Interface (HDMI) interface, a Controller Area Network (CAN) interface, a Serial Peripheral Interface (SPI) interface, an Ethernet interface, a wireless interface, or any other appropriate interface). For example, the computing device 400 can omit a display device 410, but can include display device interface circuitry (e.g., a connector and driver circuitry) to which a display device 410 can be coupled.

The computing device 400 can include the processor 402 (e.g., one or more processing devices). As used herein, the term "processing device" can refer to any device or portion of a device that processes electronic data from registers and/or memory to transform that electronic data into other electronic data that can be stored in registers and/or memory. The processor 402 can include one or more digital signal processors (DSPs), application-specific integrated circuits (ASICs), central processing units (CPUs), graphics processing units (GPUs), cryptoprocessors (specialized processors that execute cryptographic algorithms within hardware), server processors, or any other suitable processing devices.

The computing device 400 can include a storage device 404 (e.g., one or more storage devices). The storage device 404 can include one or more memory devices such as random access memory (RAM) (e.g., static RAM (SRAM) devices, magnetic RAM (MRAM) devices, dynamic RAM (DRAM) devices, resistive RAM (RRAM) devices, or conductive-bridging RAM (CBRAM) devices), hard drive-based memory devices, solid-state memory devices, networked drives, cloud drives, or any combination of memory devices. In one or more embodiments, the storage device 404 can include memory that shares a die with a processor 402. In such an embodiment, the memory can be used as cache memory and can include embedded dynamic random-access memory (eDRAM) or spin transfer torque magnetic random-access memory (STT-MRAM), for example. In one or more embodiments, the storage device 404 can include non-transitory computer readable media having instructions thereon that, when executed by one or more processing devices (e.g., the processor 402), cause the computing device 400 to perform any appropriate ones of or portions of the methods disclosed herein.

The computing device 400 can include an interface device 406 (e.g., one or more interface devices 406). The interface device 406 can include one or more communication chips, connectors, and/or other hardware and software to govern communications between the computing device 400 and other computing devices. For example, the interface device 406 can include circuitry for managing wireless communications for the transfer of data to and from the computing device 400. The term "wireless" and its derivatives can be used to describe circuits, devices, systems, methods, techniques, communications channels, etc., that can communicate data through the use of modulated electromagnetic radiation through a nonsolid medium. The term does not imply that the associated devices do not contain any wires, although in one or more embodiments the associated devices might not contain any wires. Circuitry included in the interface device 406 for managing wireless communications can implement any of a number of wireless standards or protocols, including but not limited to Institute for Electrical and Electronic Engineers (IEEE) standards including Wi-Fi (IEEE 802.11 family), IEEE 802.16 standards (e.g., IEEE 802.16-2005 Amendment), Long-Term Evolution (LTE) project along with any amendments, updates, and/or revisions (e.g., advanced LTE project, ultra mobile broadband (UMB) project (also referred to as "3GPP2"), etc.). In one or more embodiments, circuitry included in the interface device 406 for managing wireless communications can operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. In one or more embodiments, circuitry included in the interface device 406 for managing wireless communications can operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). In one or more embodiments, circuitry included in the interface device 406 for managing wireless communications can operate in accordance with Code Division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. In one or more embodiments, the interface device 406 can include one or more antennas (e.g., one or more antenna arrays) to receipt and/or transmission of wireless communications.

In one or more embodiments, the interface device 406 can include circuitry for managing wired communications, such as electrical, optical, or any other suitable communication protocols. For example, the interface device 406 can include circuitry to support communications in accordance with Ethernet technologies. In one or more embodiments, the interface device 406 can support both wireless and wired communication, and/or can support multiple wired communication protocols and/or multiple wireless communication protocols. For example, a first set of circuitry of the interface device 406 can be dedicated to shorter-range wireless communications such as Wi-Fi or Bluetooth, and a second set of circuitry of the interface device 406 can be dedicated to longer-range wireless communications such as global positioning system (GPS), EDGE, GPRS, CDMA, WiMAX, LTE, EV-DO, or others. In one or more embodiments, a first set of circuitry of the interface device 406 can be dedicated to wireless communications, and a second set of circuitry of the interface device 406 can be dedicated to wired communications.

The computing device 400 can include battery/power circuitry 408. The battery/power circuitry 408 can include one or more energy storage devices (e.g., batteries or capacitors) and/or circuitry for coupling components of the computing device 400 to an energy source separate from the computing device 400 (e.g., AC line power).

The computing device 400 can include a display device 410 (e.g., multiple display devices). The display device 410 can include any visual indicators, such as a heads-up display, a computer monitor, a projector, a touchscreen display, a liquid crystal display (LCD), a light-emitting diode display, or a flat panel display.

The computing device 400 can include other input/output (I/O) devices 412. The other I/O devices 412 can include one or more audio output devices (e.g., speakers, headsets, earbuds, alarms, etc.), one or more audio input devices (e.g., microphones or microphone arrays), location devices (e.g., GPS devices in communication with a satellite-based system to receive a location of the computing device 400, as known in the art), audio codecs, video codecs, printers, sensors (e.g., thermocouples or other temperature sensors, humidity sensors, pressure sensors, vibration sensors, accelerometers, gyroscopes, etc.), image capture devices such as cameras, keyboards, cursor control devices such as a mouse, a stylus, a trackball, or a touchpad, bar code readers, Quick Response (QR) code readers, or radio frequency identification (RFID) readers, for example.

The computing device 400 can have any suitable form factor for its application and setting, such as a handheld or mobile computing device (e.g., a cell phone, a smart phone, a mobile internet device, a tablet computer, a laptop computer, a netbook computer, an ultrabook computer, a personal digital assistant (PDA), an ultra mobile personal computer, etc.), a desktop computing device, or a server computing device or other networked computing component.

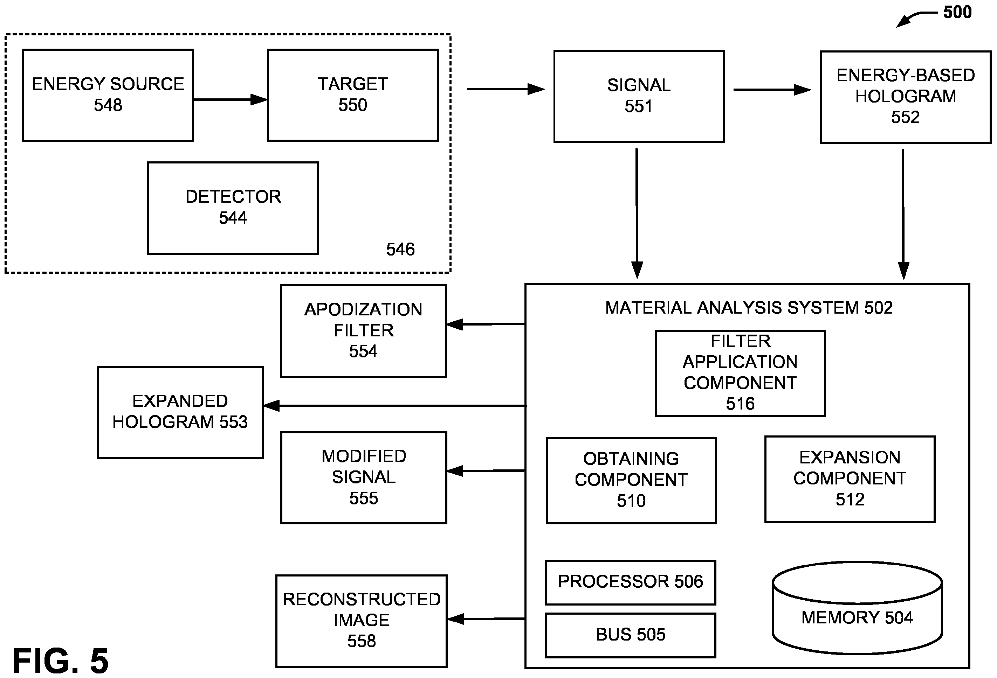

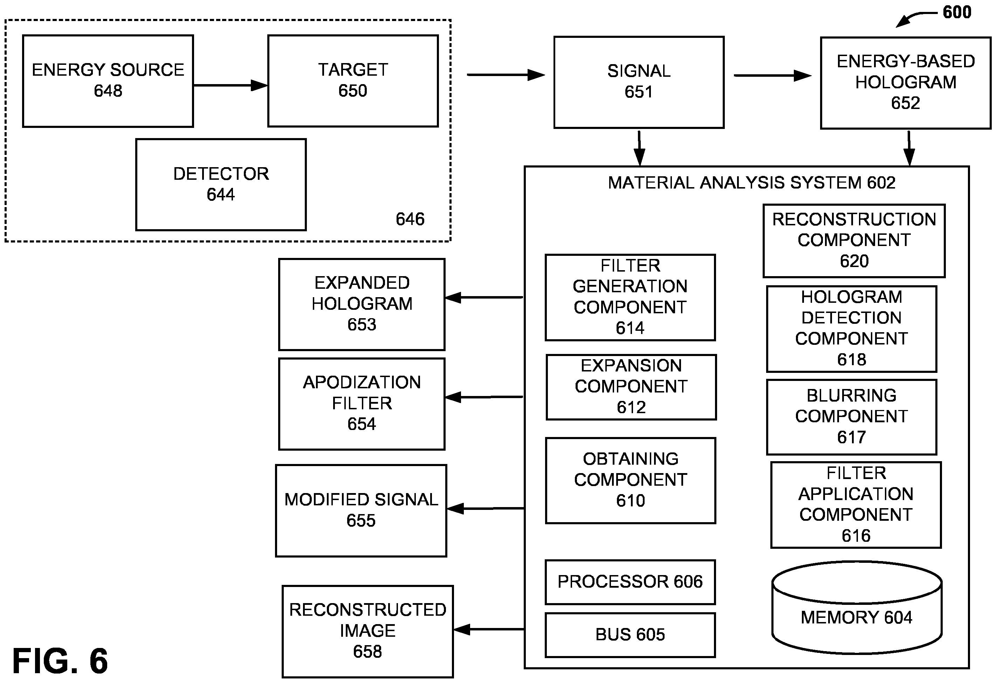

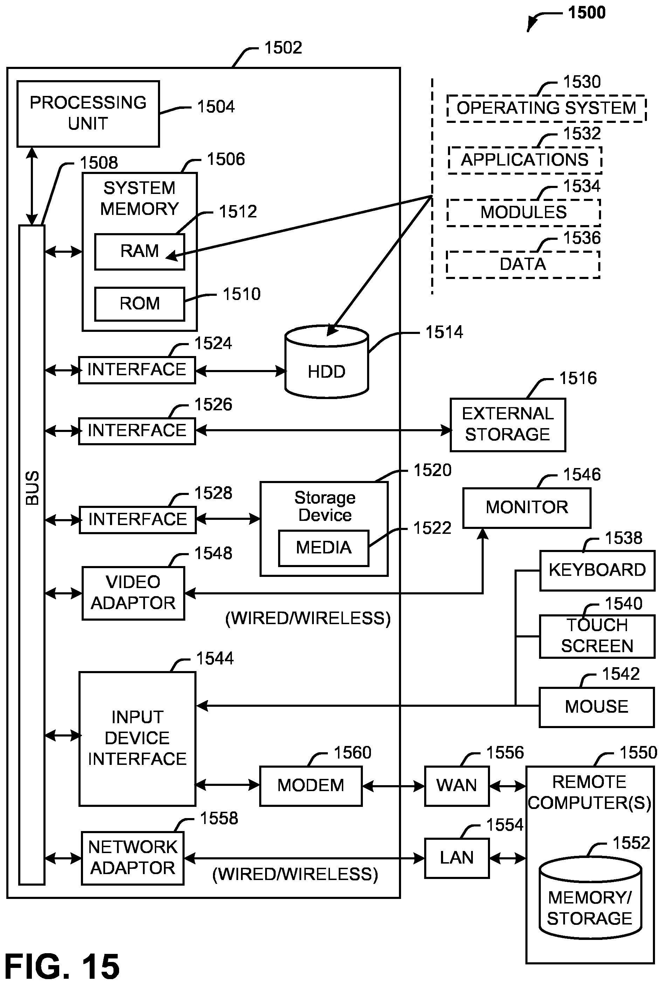

Referring next to FIGS. 5 and 6, in one or more embodiments, the non-limiting systems 500 and/or 600 illustrated at FIGS. 5 and 6, and/or systems thereof, can further comprise one or more computer and/or computing-based elements described herein with reference to a computing environment, such as the computing environment 1500 illustrated at FIG. 15. In one or more described embodiments, computer and/or computing-based elements can be used in connection with implementing one or more of the systems, devices, components and/or computer-implemented operations shown and/or described in connection with FIGS. 5 and/or 6 and/or with other figures described herein.

Turning first to FIG. 5, the figure illustrates a block diagram of an example, non-limiting system 500 that can comprise a material analysis system 502 and an electron application device 546. The material analysis system 502 can facilitate a process to generate a reconstructed image based on a signal 555, based on output from the electron application device 546. The non-limiting system 500 can be employed in connection with a holography system, such as an in-line electron or laser holography system.

In one or more embodiments, the material analysis system 502 can be at least partially comprised by the computing device 400.

In one or more embodiments, the material analysis system 502 can at least partially comprise the energy application device 546.

It is noted that the material analysis system 502 is only briefly detailed to provide but a lead-in to a more complex and/or more expansive material analysis system 602 as illustrated at FIG. 6. That is, further detail regarding processes that can be performed by one or more embodiments described herein will be provided below relative to the non-limiting system 600 of FIG. 6.

Still referring to FIG. 5, the material analysis system 502 can comprise at least a memory 504, bus 505, processor 506, obtaining component 510, expansion component 512 and filter application component 516. The processor 506 can be the same as the processor 402, comprised by the processor 402 or different therefrom. The memory 504 can be the same as the storage device 404, comprised by the storage device 404 or different therefrom.

Using the above-noted components, the material analysis system 502 can facilitate a process to generate and apply an apodization filter 554 to an energy-based hologram 553, which is based on an initial hologram 552, resulting in a modified signal 555 that can be employed to generate the reconstructed image 558.

Generally, the obtaining component 510 can acquire data (e.g., the signal 551) relative to a target composition 550, and particularly based on application of an energy source 548 of the electron application device 546 to the target 550. The signal 551 can define an energy-based hologram 552 and/or be used to generate the hologram 552, such as by the energy application device 546 and/or the material analysis system 502. In one or more embodiments, the energy application device 546 can apply electrons, such as an electron beam, to the target 550.

Based on the signal 551, the expansion component 512 can generally expand the initial hologram 552 at a boundary of the initial hologram 552. This can result in a modified hologram, such as an expanded hologram 553 having an expanded portion at the boundary. Specifically, the expanded portion can be generated based on the expansion executed and/or at least directed by the expansion component 512.

Based on the expanded hologram 553, which includes the expanded portion, and on a modified signal 555 defining the expanded hologram, the filter application component 516 can generally apply an apodization filter 554 to overlap the expanded portion of the expanded hologram 553.

As a result of these components, a reconstructed image 558 can be generated based on the expanded hologram 553, where the reconstructed image 558 can comprise reduced artifacts as compared to an image reconstructed by existing frameworks. This can at least partially be due to the increase in information of the modified signal 555 which can be employed to generate the reconstructed image 558 due to the apodization framework employed by the material analysis system 502.

The obtaining component 510, expansion component 512 and filter application component 516 can be operatively coupled to the processor 506 which can be operatively coupled to the memory 504. The bus 505 can provide for the operative coupling. The processor 506 can facilitate execution of the obtaining component 510, expansion component 512 and filter application component 516. The obtaining component 510, expansion component 512 and filter application component 516 can be stored at the memory 504.

In general, the non-limiting system 500 can employ any suitable method of communication (e.g., electronic, communicative, internet, infrared, fiber, etc.) to provide communication between the material analysis system 502, the electron application device 546 and/or any device associated with a user entity.

Turning next to FIG. 6, a non-limiting system 600 is illustrated that can comprise a material analysis system 602 and electron application device 646. Repetitive description of like elements and/or processes employed in respective embodiments is omitted for sake of brevity. Description relative to an embodiment of FIG. 5 can be applicable to an embodiment of FIG. 6. Likewise, description relative to an embodiment of FIG. 6 can be applicable to an embodiment of FIG. 5.

Generally, the material analysis system 602 can facilitate one or more processes to generate and apply an apodization filter 654 to a modified hologram (e.g., an expanded hologram 553) resulting in a modified signal 655 that can be employed to generate a reconstructed image 658 having reduced artifacts as compared to a reconstructed image generated by existing frameworks.

In one or more embodiments, the material analysis system 602 can be at least partially comprised by the computing device 400.

In one or more embodiments, the material analysis system 602 can at least partially comprise the energy application device 646.

In one or more embodiments, the energy application device 646 can be comprised by a holography system, such as an in-line electron or laser holography system.

The energy application device 646, such as an electron energy application device 646, can comprise any suitable processor or memory for facilitating one or more processes including, but not limited to, securement of a target 650, application of an energy stream from an energy source 648 to the target 650, generation of an initial energy-based hologram 652 from an initial signal 651 resulting from the application of the energy stream, and/or detection of the initial hologram 652.

One or more communications between one or more components of the non-limiting system 600 can be provided by wired and/or wireless means including, but not limited to, employing a cellular network, a wide area network (WAN) (e.g., the Internet), and/or a local area network (LAN). Suitable wired or wireless technologies for supporting the communications can include, without being limited to, wireless fidelity (Wi-Fi), global system for mobile communications (GSM), universal mobile telecommunications system (UMTS), worldwide interoperability for microwave access (WiMAX), enhanced general packet radio service (enhanced GPRS), third generation partnership project (3GPP) long term evolution (LTE), third generation partnership project 2 (3GPP2) ultra-mobile broadband (UMB), high speed packet access (HSPA), Zigbee and other 802.XX wireless technologies and/or legacy telecommunication technologies, BLUETOOTH^{®}, Session Initiation Protocol (SIP), ZIGBEE^{®}, RF4CE protocol, WirelessHART protocol, 6LoWPAN (Ipv6 over Low power Wireless Area Networks), Z-Wave, an advanced and/or adaptive network technology (ANT), an ultra-wideband (UWB) standard protocol and/or other proprietary and/or non-proprietary communication protocols.

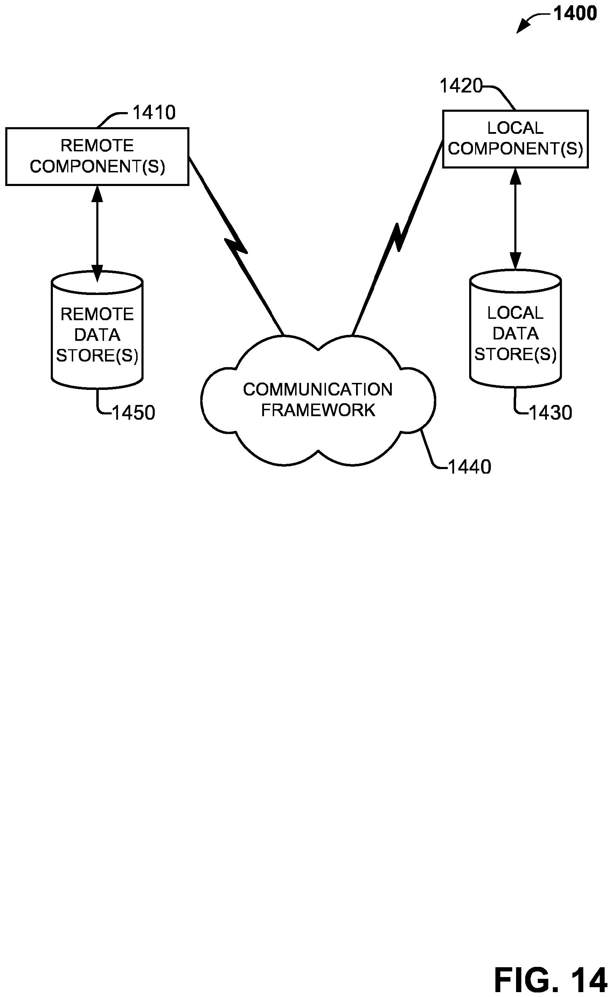

The material analysis system 602 can be associated with, such as accessible via, a cloud computing environment, such as the cloud computing environment 1400 of FIG. 14.

The material analysis system 602 can comprise a plurality of components. The components can comprise a memory 604, processor 606, bus 605, obtaining component 610, expansion component 612, filter generation component 614, filter application component 616, blurring component 617, hologram detection component 618 and/or reconstruction component 620. Using these components, the material analysis system 602 can output an expanded hologram 653, apodization filter 654, modified signal 655 and/or reconstructed image 658.

Discussion next turns to the processor 606, memory 604 and bus 605 of the material analysis system 602. For example, in one or more embodiments, the material analysis system 602 can comprise the processor 606 (e.g., computer processing unit, microprocessor, classical processor, quantum processor and/or like processor). In one or more embodiments, a component associated with material analysis system 602, as described herein with or without reference to the one or more figures of the one or more embodiments, can comprise one or more computer and/or machine readable, writable and/or executable components and/or instructions that can be executed by processor 606 to provide performance of one or more processes defined by such component and/or instruction. In one or more embodiments, the processor 606 can comprise the expansion component 612, obtaining component 610, filter generation component 614, obtaining component 610, expansion component 612, filter generation component 614, filter application component 616, blurring component 617, hologram detection component 618 and/or reconstruction component 620.

In one or more embodiments, the material analysis system 602 can comprise the computer-readable memory 604 that can be operably connected to the processor 606. The memory 604 can store computer-executable instructions that, upon execution by the processor 606, can cause the processor 606 and/or one or more other components of the material analysis system 602 (e.g., obtaining component 610, expansion component 612, filter generation component 614, filter application component 616, blurring component 617, hologram detection component 618 and/or reconstruction component 620) to perform one or more actions. In one or more embodiments, the memory 604 can store computer-executable components (e.g., obtaining component 610, expansion component 612, filter generation component 614, filter application component 616, blurring component 617, hologram detection component 618 and/or reconstruction component 620).

The material analysis system 602 and/or a component thereof as described herein, can be communicatively, electrically, operatively, optically and/or otherwise coupled to one another via a bus 605. Bus 605 can comprise one or more of a memory bus, memory controller, peripheral bus, external bus, local bus, quantum bus and/or another type of bus that can employ one or more bus architectures. One or more of these examples of bus 605 can be employed.

In one or more embodiments, the material analysis system 602 can be coupled (e.g., communicatively, electrically, operatively, optically and/or like function) to one or more external systems (e.g., a non-illustrated electrical output production system, one or more output targets and/or an output target controller), sources and/or devices (e.g., classical and/or quantum computing devices, communication devices and/or like devices), such as via a network. In one or more embodiments, one or more of the components of the material analysis system 602 and/or of the non-limiting system 600 can reside in the cloud, and/or can reside locally in a local computing environment (e.g., at a specified location).

In addition to the processor 606 and/or memory 604 described above, the material analysis system 602 can comprise one or more computer and/or machine readable, writable and/or executable components and/or instructions that, when executed by processor 606, can provide performance of one or more operations defined by such component and/or instruction.

Turning now to the additional components of the material analysis system 602 (e.g., obtaining component 610, expansion component 612, filter generation component 614, filter application component 616, blurring component 617, hologram detection component 618 and/or reconstruction component 620), generally, the material analysis system 602 can perform a set of processes that can be separated into three steps: initial signal acquisition and initial hologram expansion, filter generation, and filter application and image reconstruction. In one or more embodiments, the set of processes further can comprise internal area buffering, prior to image reconstruction.

Turning first to the initial signal acquisition and initial hologram expansion, detail will be provided regarding the obtaining component 610 and expansion component 612.

Turning first to the obtaining component 610, this component can generally acquire the signal 651. The signal 651 can originate from and/or be caused by the energy application device 646. That is, the signal 651 can be a result of application of an energy stream by an energy source 648 to the target 650, where the energy source can be an electron energy source generating an electron beam and/or stream. In one or more embodiments, the target 650 can be secured by the electron application device 646.

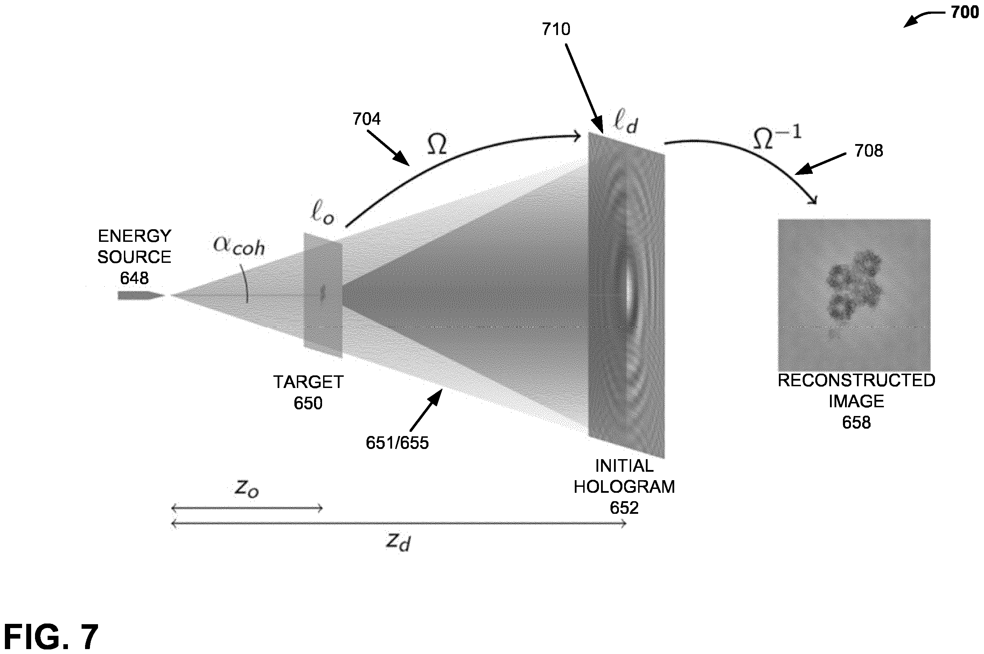

Turning briefly to schematic 700 of FIG. 7, based on the acquired signal 651, an initial energy-based hologram 652 can be generated (hologram generation process 704), such as by the energy application device 646 (e.g., by the energy source 648). The initial hologram 652 can be observed generally at a length *l*_{d} from an output of the energy source 648, with the target 650 being located at a length *lₒ* from the output of the energy source 648.

At FIG. 7, Ω represents the forward propagation and Ω⁻¹ represents the inverse backward propagation of the wave field between the detector and the sample, using Fourier optics techniques.

The initial hologram 652 is to be reconstructed as an image (e.g., reconstructed image 658) to allow for viewing of information of the signal 651 corresponding to the target 650. However, using existing apodization techniques, signal loss often occurs, which is undesirable. Indeed, using existing apodization techniques, signal can be lost due to artifacts, such as edge artifacts, ringing artifacts 811 (e.g., caused by Gibbs phenomena), ghost artifacts 813 or other artifacts which can be carried over from the initial hologram 652 or created during a reconstruction process 708. Instead, the material analysis system 602 can execute one or more processes that can reduce or even eliminate these artifacts that are caused by, and/or not reduced/eliminated by, existing apodization frameworks. Generally, the material analysis system 602 can add a hologram expansion process, apodization process and an optional blurring process prior to the reconstruction process 708.

For example, referring still to FIGS. 6 and 7, but also now referring to FIG. 8A, based on the acquired signal 651, the expansion component 612 can expand an initial hologram boundary of the initial hologram 652. The boundary can be an internal boundary or external boundary. In one or more embodiments, this expansion can be executed relative to a full boundary 710 of the initial hologram 652. In one or more other embodiments, the expansion can be executed for at least a portion of the boundary 710, such as for less than all of the full boundary 710.

In one or more embodiments, a boundary at which the expansion can be executed can be other than at an external boundary of the initial hologram 652, such as where a non-square, patchy, blotchy, fragmented and/or only partial initial hologram 652 is generated and/or available, and/or where the initial hologram 652 is an aggregation of a plurality of holograms.

In one or more embodiments, the initial hologram 652 can comprise a plurality of holograms stitched together, where the holograms are of different targets 650 or even of the same target 650. In one or more embodiments, a detector employed by the non-limiting system 600 can comprise broken pixels, non-square or non-quadrilateral shape, thus resulting in a boundary of an initial hologram to be expanded being other than at an external boundary 710 of the initial hologram.

More particularly, the expansion component 612 can expand the initial hologram 652 not be stretching an image of the initial hologram 652, but by adding one or more additional expanded portions generally at the initial hologram outer border 710.

For example, the initial hologram 652 can be expanded in a plurality of directions by copying pixels at the boundary 710 of the initial hologram 652 and applying those copied pixels adjacent to the boundary, external to the initial hologram area 652, to build the expansion portion, such as an expansion portion 802 illustrated at FIG. 8A. Accordingly, this process can result in an expanded hologram 653 having an expansion portion 802 and an initial hologram 652 portion. Put another way, this process can result in the data of the initial hologram 652 (data of the signal 551) being inset into a larger memory space.

For example, the expansion can comprise first copying an existing row of pixels into a neighboring row, and then reducing the copied and applied pixels' values all by a fixed percentage, such as about 10%.This process can be repeated, with a second copied row, which is then about 20% lower in intensity than the original data row. This can be repeated until some set threshold, such as about 3%.

For another example, in one or more embodiments, the initial hologram 652 can be expanded on all sides in horizontal direction by 1/32 of hologram width and in vertical direction by 1/32 of hologram height. Expanded areas 803 are filled with value of the edge line of the hologram on the respective side. Every time the line is copied, it can be blurred with Gaussian blur with sigma equal to 2, which produces progressive blur. Then the hologram is further expanded by 15/32 of the original hologram size filled with value 0. The specific resulting expanded hologram 653 at FIG. 8A can have an area twice that of the initial hologram 652.Put another, this process can comprise the following steps:
A. Prepare a cosine kernel. The size can be equal to 1/32 of the sides of the initial hologram 652.
B. The kernel of size NxM can be generated by calculating 1D vectors of values of cosine in range -Pi/2 to Pi/2 of length M and N and then calculating outer multiplication of these vectors.
C. The kernel can be normalized by dividing each element by the sum of all elements of the kernel.

Turning specifically to FIG. 8A, an expanded portion 802 can at least partially, or even fully, bound the initial hologram area, thereby forming the expanded portion 802. While bounding at FIG. 8A is illustrated as being external, bounding can alternatively be internal and/or external. Indeed, in one or more embodiments, more than one portion of an initial hologram area can be bounded, such as by different expanded portions.

The particular expanded portion 802 illustrated at the expanded hologram 653 of FIG. 8a has both a hologram inner border 803 and a hologram outer border 804. The hologram inner border 803 can be generally aligned with, such as at least partially contiguous with, or fully contiguous with, an initial hologram outer border at the illustrated boundary 710.

The illustrated expanded portion 802 has a quadrilateral hologram inner border 803 and a quadrilateral hologram outer border 804. More particularly, each of these borders 803 and 804 is rectangular, and further is square in shape.

Each of top, bottom, left side and right-side portions of the expanded portion 802, as illustrated on the page at FIG. 8, is expanded an equal distance from the initial hologram outer border 710.

In one or more embodiments, the expanded portion 802 can have any another suitable shape.

In one or more embodiments, expansion in any one or more directions can be at different distances from any one or more other directions.

In one or more embodiments, the expanded portion 802 can less than fully bound the initial hologram area.

In one or more embodiments, a hologram inner border 803 of the expansion portion 802 can be other than fit directly to (e.g., contiguous) with at least one portion of the boundary 710, without being limited thereto.

In view of any one or more of the foregoing embodiments, a result of operation of the expansion component 612 can be that wave artifacts 807 (e.g., of non-apodized hologram image reconstruction 657), that would otherwise propagate (or reflect) back into an internal area 808 of the initial hologram 652 (as illustrated at non-apodized hologram image reconstruction 657 at FIG. 8A), can be otherwise allowed to instead propagate across the respective boundary 710 (whether an internal boundary, external boundary, and/or a combination thereof) and into the respective expanded portion 802. Thus, as shown at the expanded hologram 653, the artifacts are not visible in the internal area 808 of the initial hologram area (e.g., within the boundary 710). Further, another result of operation of the expansion component 612 can be that ghost artifacts 813, that would otherwise be caused in the internal area 808, can be reduced and/or altogether prevented.

That is, put more generally, the use of the expanded portion can allow for reduction and/or elimination of artifacts at the initial hologram 652, thus resulting in reduction in less data, and thus increase in more data for the reconstruction process 708, as compared to existing frameworks.

It is noted that the initial hologram portions 652 comprise various objects 809 for ease of reference and illustration of the various concepts described herein.

As an example of the above benefits, turning briefly to FIG. 9, illustrated is a graph 900 demonstrating the benefits of the apodization frameworks provided herein by the non-limiting systems 500 and 600. The graph illustrates reconstruction intensity (normalized using artificial quantifying units) at the y-axis and pixel index (in units of the pixel number) at the x-axis. The graph 900 illustrates lack of artifact interference with a reconstructed image (e.g., reconstructed image 658) reconstructed from a framework discussed herein, as compared to reconstructed images reconstructed from use of a square apodization filter (e.g., apodization filter 655) and from use of a circular apodization filter.

The FIG. 9 can represent a diagonal profile because it best exhibits the difference between circular apodization and external apodization. The signal in circular drops to near zero at the extremes of the x-axis, while the external maintains maximal intensity.

Turning now to additional illustrations at FIGS. 8B and 8C, in addition still to FIGS. 6 and 7, various exemplary apodization filter embodiments are illustrated. First, at FIG. 8B, a set of illustrations 851, 852 and 853 are provided. Then, at FIG. 8C, another illustration 854 is provided. Each of these illustrated filters can be generated by the filter generation component 614, based on the initial signal 651 obtained by the obtaining component 610, and based on the expansion performed by the expansion component 612, to thereby generate a respective apodization filter.

The purpose of the apodization filter can be to apply the apodization filter to the initial hologram 652, thus resulting in a modified signal 655, and thus further resulting in a modified version of the expanded hologram 653. In this way, artifacts at the modified version of the expanded hologram 653 can further be reduced and/or eliminated (e.g., filtered out) at the one or more expanded portions, and/or artifacts otherwise caused by the reconstruction process 708 relative to the one or more expanded portions can be reduced and/or eliminated.

At illustration 851, a first exemplary apodization filter 654 is generated to overlap at least a portion of the expanded portion 802. At illustration 851, the apodization filter 654 has a filter inner border 862 and a filter outer border 864.

In one or more embodiments, relative to the illustration 851, the apodization filter 654 can be generated only to overlap and/or otherwise apply to the expanded portion 802. In one or more embodiments, the apodization filter 654 can be generated to fully overlap all area of the expanded portion 802. In one or more embodiments, where a plurality of expanded portions are generated, a plurality of apodization filters can be correspondingly generated, by the apodization filter generation component 614 to overlap some or all portions of some or all of the plurality of expanded portions, as is suitable for the needs and/or use of the reconstructed image to be reconstructed using the respective expanded hologram.

In one or more embodiments, the apodization filter 654 can be generated by the filter generation component 614 to fit to the expanded portion 802 illustrated at FIG. 8A, such as to the hologram inner border 803 and/or the hologram outer border 804 of the expanded hologram 653.

In one or more embodiments, the apodization filter 654 can be generated by the filter generation component 614 to be at least partially contiguous with the hologram inner border 803 and/or the hologram outer border 804 of the expanded hologram 653.

In one or more embodiments, the apodization filter 654 can be generated by the filter generation component 614 to be at least partially contiguous with the initial hologram boundary 710, which again is illustrated as an external boundary, but is not limited thereto.

In one or more embodiments, the apodization filter 654 can be generated by the filter generation component 614 such that at least one of the filter inner border 862 or the filter outer border 864 is a quadrilateral border, such as rectangular border, such as a square border.

In one or more embodiments, the apodization filter 654 can be generated by the filter generation component 614 having both a rectangular filter inner border 862 and a rectangular filter outer border 864, as illustrated at apodization filter example 654 of illustration 851 of FIG. 8B.

For example, the illustrated apodization filter 654 at FIG. 8B has a quadrilateral filter inner border 862 and a quadrilateral filter outer border 864. More particularly, each of these borders 862 and 864 is rectangular, and further is square in shape.

Each of top, bottom, left side and right-side portions of the apodization filter 654, as illustrated at the illustration 851 , extends an equal distance from the initial hologram outer border 710.

In one or more embodiments, the apodization filter 654 can have any another suitable shape.

In one or more embodiments, extension of the apodization filter 654 in any one or more directions can be at different distances from any one or more other directions.

In one or more embodiments, the apodization filter 654 can be configured to less than fully bound the initial hologram 652.

In one or more embodiments, a filter inner border 862 of the apodization filter 654 can be other than fit directly to (e.g., contiguous) with at least one portion of the initial hologram boundary 710, without being limited thereto.

Turning briefly to the illustration 854 at FIG. 8C, in one or more embodiments, the apodization filter 654 can be generated by the filter generation component 614 by applying at least one cosine profile to the signal 651.

In one or more embodiments, the filter generation component 614 can generate the apodization filter 654 based on generation of a first filter 871 (FIGS. 8C and 8D) and a second filter 872 (FIGS. 8C and 8D) and based on subsequent aggregation of the first filter 871 and the second filter 872. The filter generation component 614 can generate the first filter 871 by employing a first cosine profile, and the filter generation component 614 can generate the second filter by 872 by employing a second cosine profile that is different from the first cosine profile.

For example, for a first filter 871, the following first cosine profile can be employed: cos (Pi/2w (w/2-X)) for X between 0 and w, 0 for X between w and Width - w, and cos (Pi/2w (w/2-(Width-X))) for X between Width-X and Width.

For a second filter 872, the following second cosine profile can be employed: cos (Pi/2w (w/2-Y)) for Y between 0 and w, 0 for Y between w and Height - w, and cos (Pi/2w (w/2-(Height-Y))) for Y between Height-Y and Width.

Aggregation of the first filter 871 and the second filter 872 can be by way of use of element-wise minimums (e.g., in positive horizontal, negative horizontal, positive vertical and/or negative vertical directions) to automatically generate the apodization filter 654 therefrom.

It will be appreciated that the first and second cosine profiles can be applied at least partially at the same time as one another. Accordingly, "first" and "second" are mere reference designations and do not indicate necessarily that one profile is employed before the other.

Discussion next turns back to FIG. 8B to additional embodiments of apodization filters that can be employed. As illustrated at illustration 852, an apodization filter 655 can be generated by the filter generation component 614 at a border of the initial hologram 652 without generation of, or use of, an expanded portion 802. Such apodization filter 655 can be generated using a cosine profile. Such apodization filter 655 can be generated from an aggregation of a first generated filter and a second generated filter, such as described above, where different and/or same cosine profiles are employed to generate these filters.

The apodization filter 655 can be combined with an apodization filter 654, thereby forming an aggregated apodization filter 656 (e.g., illustration 853). In one or more embodiments both filters 655 and 654 can be generated and then combined. In one or more embodiments the profiles of both filters 655 and 654 together can be generated as a single apodization filter 656.

Discussion next turns to application of the apodization filter 654 by the filter application component 616. That is, the filter application component 616 can generally overlap the apodization filter 654 relative to the expanded portion 802 of the expanded hologram 653.

Discussion next turns to the blurring component 617 and back to the illustration of the expanded hologram 653 at FIG. 8A. That is, the blurring component 617 can generally blurs an internal area of the expanded hologram 653, internal to an external border of the initial hologram 652 (e.g., corresponding to the initial hologram 652). This blurring can be performed optionally, such as in addition to use of the one or more apodization filters discussed above. For example, in one or more embodiments, the blurring by the blurring component 617 can be executed prior to the application of the one or more apodization filters or, alternatively, and/or additionally, subsequent to the application of the one or more apodization filters.

For example, as illustrated at the expanded hologram 653 with blurring of FIG. 8A, the expanded portion 802 of objects 809 have been blurred, such as similar to as would have resulted without apodization at non-apodized hologram image reconstruction 657.

In one or more embodiments, the blurring component 617 can progressively increase the blurring of the internal area 808 at distances that are progressively increased from a center of the internal area 808. That is, greater blurring can be employed the greater the distance of the internal area 808 from a center of the internal area 808.

It is noted that the element number 808 is employed here only for reference and that the discussion here refers to the internal area of any of the initial holograms discussed herein.

Referring back again to FIG. 6, and to additional components of the material analysis system 602, the hologram detection component 618 can detect one or more aspects of the expanded hologram 653, such as corresponding to the modified signal 655. Using the results of the hologram detection component 618, the reconstruction component 620 can reconstruct an image (e.g., a reconstructed image 658) of the target 650 using one or more propagation techniques, such as back propagation.

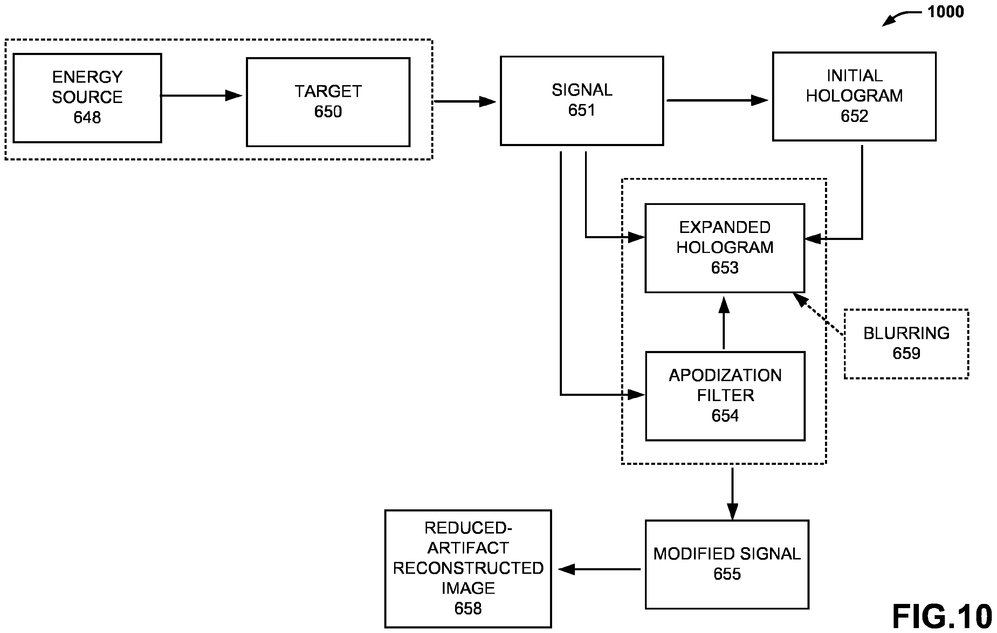

For example, as illustrated at FIG. 8E, use of the expanded hologram 653, the apodization filter 654, and the optional blurring 659 (FIG. 10) performed by the blurring component 617, can result in the reconstructed image 658 having reduced artifacts 807, 811 and/or 813 interfering with usable information, as compared to existing apodization frameworks. For example, as shown at FIG. 8E, the initial hologram portion 892 of the reconstructed image 658 comprises the objects 809 having reduced or no ringing artifacts 811 directly near the objects 809. Further, ghost artifacts 813 and wave artifacts 807 relative to the boundary 710 are eliminated or at most provided within a portion 893 of the reconstructed image 658 that corresponds to the expanded portion 802, and these artifacts are not causing loss of information (e.g., loss of image) relative to the initial hologram portion 892.

That is, as compared to existing frameworks, ringing, blurring, wave, ghost and/or other artifacts can be reduced both at internal portions and edge portions of the reconstructed image 658 corresponding to internal portions and edge portions of the initial hologram 652.

In one or more embodiments, the hologram detection component 618 and/or the reconstruction component 620 can be comprised by the energy application device 654 and/or one or more processes described herein as being performed by the hologram detection component 618 and/or the reconstruction component 620 can be performed by the electron application device 654 or by another device external to the material analysis system 602.

Turning now to FIG. 10, provided is a schematic 1000 that provides a set of inputs and outputs of the non-limiting system 600 as a summary of the various processes discussed above. As illustrated, the signal 651 is a result of application of an electron beam from an energy source 648 to a target 650. From the signal 651, the initial hologram 652 can be generated. Based on the initial signal 651 and on the initial hologram 652, the expansion component 612 can generate an expanded hologram 653. Based on the initial signal 651, and on the expanded hologram 653, the filter generation component 614 can generate an apodization filter 654, which can function to modify the expanded hologram 653 when applied by the filter application component 616 to the expanded portion 802 of the expanded hologram 653. That is, application of the apodization filter 654 can result in the modified signal 655, from which a reduced-artifact reconstructed image 658 can be reconstructed by use of the hologram detection component 618 and/or reconstruction component 620. Optionally, blurring 659 can be applied to the expanded hologram 653 by the blurring component 617.

In addition to the above description, the additional one or more aspects can be applied to any of the embodiments described above.

For example, the signal can be defined by a combination of signals of a plurality of holograms, and wherein the holograms are combined with one another. That is, in one or more cases, a plurality of initial holograms can be taken on shifted samples and then stitched together (e.g., located adjacent one another).

In one or more embodiments, the frameworks discussed herein can function with non-square detectors and/or with detectors with one or more broken pixels.

For example, not all detectors have a square sensor (with same number of pixels in x and y). For example, digital cameras often have a ratio of 4:3 or other. For these solid-state sensors, when a pixel fails, it can go dark such tat that a zero is always read out regardless of the signal. These failures are a natural wear mechanism, and can be caused by cosmic rays or faulty electronic connections, for example.

The presence of artificial zeros in the image, just like at the edge, can lead to issues of ringing in the reconstruction, and are best to identify and filter around.

In one or more embodiments, the frameworks discussed herein can be extended to work with detected holograms where the illumination source is poor or patchy, e.g., if a single atom source is used, it can become a trimer (triangular illumination envelope), tailoring apodization to match illumination may be beneficial.

For example, the intensity of the reference wave contribution to the hologram can scale with the illumination source. Where the reference wave drops to zero intensity the interference in that area drops to zero and the hologram is lost. For example, in FIGS. 7, the initial holograms 652 assume an artificially uniform intensity reference wave. In reality, this illumination quality and shape can vary, and by assessing it, one can chose to apodize differently around it. This could allow for prevention of noise from creeping into the reconstruction (e.g., of reconstructed image 658).

In one or more embodiments, the frameworks discussed herein can be extended to work with extrapolated data. For example, detected data can be embedded in a larger reconstruction space and that iterative reconstruction can extrapolate information correctly.

For example, iterative reconstruction can improve quality of the retrieved data (vs non-iterative or one-shot) reconstruction. Additionally, iterative reconstruction can recover, to some extent, signal that is lost outside the bounds of the detected hologram. When reconstructing this should help at least somewhat, with lower noise as well.

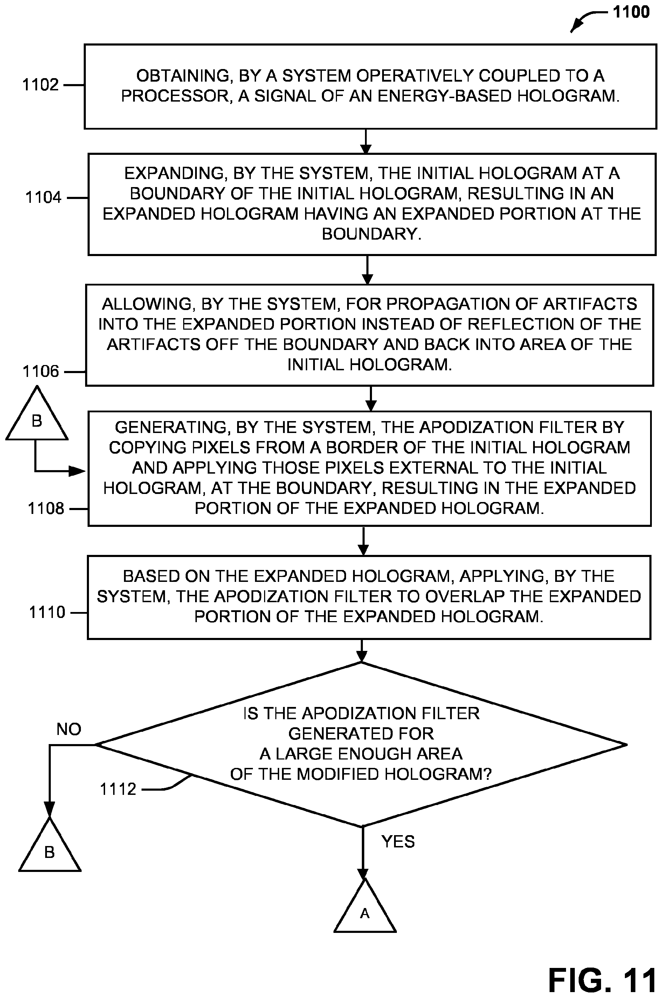

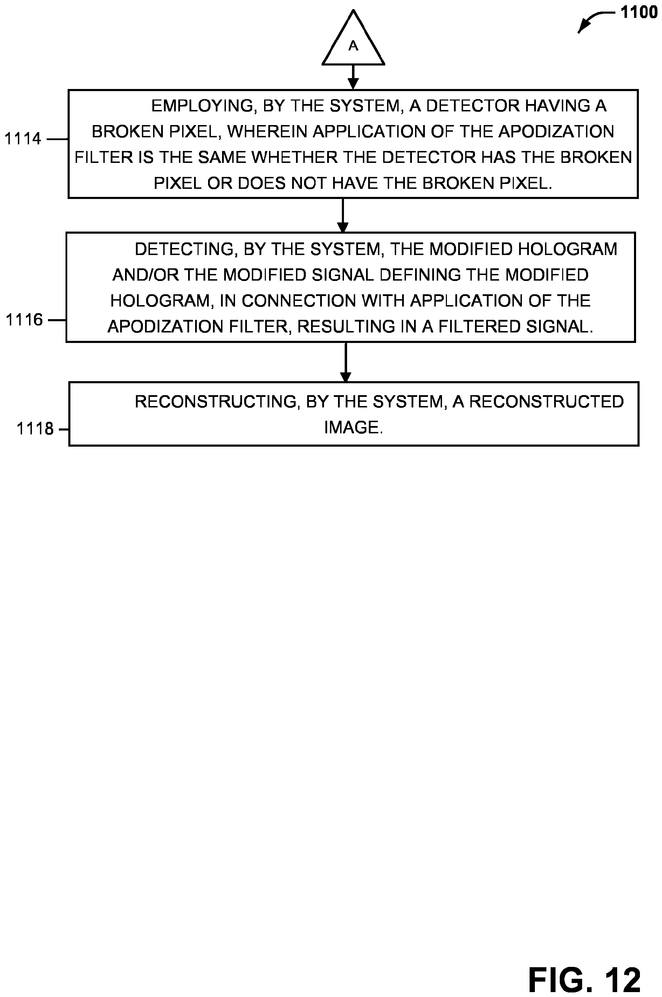

As another summary of the above-described components and functions thereof, referring next to FIGS. 11 and 12, illustrated is a flow diagram of an example, non-limiting method 1100 that can facilitate a process for apodization for reconstruction of a hologram, in accordance with one or more embodiments described herein, such as the non-limiting system 600 of FIG. 6. While the non-limiting method 1000 is described relative to the non-limiting system 600 of FIG. 6, the non-limiting method 1000 can be applicable also to other systems described herein, such as the non-limiting system 500 of FIG. 5. Repetitive description of like elements and/or processes employed in respective embodiments is omitted for sake of brevity.

At 1102, the non-limiting method 1100 can comprise obtaining, by a system operatively coupled to a processor (e.g., obtaining component 610), a signal of an energy-based hologram (e.g., initial hologram 652).

In one or more embodiments, the signal can be defined by a combination of signals of a plurality of holograms, such as where the plurality holograms are combined with one another and/or otherwise aggregated.

At 1104, the non-limiting method 1100 can comprise expanding, by the system (e.g., expansion component 612), the initial hologram at a boundary (e.g., boundary 710) of the initial hologram, resulting in an expanded hologram (e.g., expanded hologram 653) having an expanded portion (e.g., expanded portion 802) at the boundary.

In one or more embodiments, only a portion of the initial hologram disposed at the boundary is expanded.

In one or more embodiments, the initial hologram can comprise an aggregation of a plurality of holograms.

At 1106, the non-limiting method 1100 can comprise allowing, by the system (e.g., expansion component 612), for propagation of artifacts (e.g., artifacts 807) into the expanded portion instead of reflection of the artifacts off the boundary and back into area of the initial hologram.

At 1108, the non-limiting method 1100 can comprise, generating, by the system (e.g., filter generation component 614), an apodization filter (e.g., apodization filter 654) by copying pixels from a border of the initial hologram and applying those pixels external to the initial hologram, at the boundary, resulting in the expanded portion of the expanded hologram.

At 1110, the non-limiting method 1100 can comprise, based on the expanded hologram, applying, by the system (e.g., filter application component 616), the apodization filter (e.g., apodization filter 654) to overlap the expanded portion of the expanded hologram.

In one or more embodiments, the apodization filter can be applied to at least the expanded portion of the expanded hologram.

In one or more embodiments, the apodization filter can be applied only to the expanded portion of the expanded hologram.

At 1112, the non-limiting method 1100 can comprise determining, by the system (e.g., filter generation component 614), whether or not the apodization filter is generated for a large enough area of the expanded hologram (e.g., expanded hologram 653). If yes, the non-limiting method 1100 can proceed to step 1114. If not, the non-limiting method 1100 can proceed back to steps 1108 and 1110 for generation and application of the apodization filter.

At 1114, the non-limiting method 1100 can comprise employing, by the system (e.g., material analysis system 602), a detector having a broken pixel, wherein application of the apodization filter is the same whether the detector has the broken pixel or does not have the broken pixel.

At 1116, the non-limiting method 1100 can comprise detecting, by the system (e.g., hologram detection component 618), the expanded hologram (e.g., expanded hologram 653) and/or the modified signal (e.g., modified signal 655) defining the expanded hologram, in connection with application of the apodization filter, resulting in a filtered signal (e.g., modified signal 655).

At 1118, the non-limiting method 1100 can comprise reconstructing, by the system (e.g., reconstruction component 620), a reconstructed image (e.g., reconstructed image 658).

### Additional Summary

For simplicity of explanation, the computer-implemented and non-computer-implemented methodologies provided herein are depicted and/or described as a series of acts. It is to be understood that the subject innovation is not limited by the acts illustrated and/or by the order of acts, for example acts can occur in one or more orders and/or concurrently, and with other acts not presented and described herein. Furthermore, not all illustrated acts can be utilized to implement the computer-implemented and non-computer-implemented methodologies in accordance with the described subject matter. In addition, the computer-implemented and non-computer-implemented methodologies could alternatively be represented as a series of interrelated states via a state diagram or events. Additionally, the computer-implemented methodologies described hereinafter and throughout this specification are capable of being stored on an article of manufacture for transporting and transferring the computer-implemented methodologies to computers. The term article of manufacture, as used herein, is intended to encompass a computer program accessible from any computer-readable device or storage media.

The systems and/or devices have been (and/or will be further) described herein with respect to interaction between one or more components. Such systems and/or components can include those components or sub-components specified therein, one or more of the specified components and/or sub-components, and/or additional components. Sub-components can be implemented as components communicatively coupled to other components rather than included within parent components. One or more components and/or sub-components can be combined into a single component providing aggregate functionality. The components can interact with one or more other components not specifically described herein for the sake of brevity, but known by those of skill in the art.

In summary, one or more systems, computer program products and/or computer-implemented methods provided herein relate to apodization of a hologram. A system can comprise a memory that stores, and a processor that executes, computer executable components. The computer executable components can comprise an obtaining component that obtains a signal of an energy-based initial hologram, an expansion component that expands the initial hologram at a boundary of the initial hologram, resulting in an expanded hologram having an expanded portion at the boundary, and a filter application component that, based on the expanded hologram, applies an apodization filter to overlap the expanded portion of the expanded hologram.

The one or more embodiments disclosed herein can achieve improved performance relative to existing approaches. For example, based on application of an apodization filter to an expanded portion of an expanded hologram external to (e.g., outward of) an internal area of the initial hologram resulting from an obtained signal, reduction in artifacts at reconstruction of an object image from the expanded hologram can be provided. That is, use of the apodization filter at the expanded portion can allow for artifacts from the initial hologram (e.g., internal area) to propagate into the expanded portion, rather than reflecting of a boundary of the initial hologram and back into the internal area. Accordingly, edges of an object image, corresponding to the initial hologram (internal area), can be reconstructed with reduced presence of artifacts as compared to use of existing frameworks. That is, use of the apodization filter as described herein can result in reduction in signal loss (e.g., relative to a signal defining the initial hologram).

In one or more embodiments described herein, use of blurring to the initial hologram area (e.g., internal area of the expanded hologram), in addition to use of the apodization filter, can result in reduction of ringing-type artifacts at the object image upon reconstruction of the object image from the expanded and apodized hologram.

Moreover, one or more embodiments described herein can beneficially provide focus/direction for plural targets at least partially in parallel with one another. For example, holograms from two or more targets being acted on by two or more different energy sources can be apodized at least partially in parallel with one another.

Further, the embodiments described herein can be adapted to work with non-square detectors, detectors with broken pixels, combined holograms (e.g., resulting from holograms taken relative to shifted sampling, or holograms having limited or patchy illumination).

Indeed, in view of the one or more embodiments described herein, a practical application of the one or more systems, computer-implemented methods and/or computer program products described herein can be ability to efficiently (e.g., based on a single apodization filter or a combination of filters) maximize usable information obtained from an signal sample resulting from application of electrons to a target (e.g., a signal defining a hologram). That is, hologram internal portions and border portions can be smoothed and/or corresponding object image reconstructions can be provided having reduced artifacts. This can be accomplished without leaving a non-filtered ring of sample image having increased artifacts as compared to a remainder (e.g., internal portion) of the sample image. Put another way, signal loss can be reduced and/or prevented relative to internal portions and/or border portions of a sample image reconstructed from an energy-based hologram (e.g., a low energy electron hologram).

These are useful and practical applications of computers, thus providing enhanced (e.g., improved and/or optimized) material analysis and target data output (e.g., output relating to one or more targets being sampled using energy-based holograms, such as in-line low energy electron holograms and/or in-line high energy electron holograms). Overall, such computerized tools can constitute a concrete and tangible technical improvement in the fields of material analysis, and more particularly in material analysis using electron hologram techniques.

Furthermore, one or more embodiments described herein can be employed in a real-world system based on the disclosed teachings. For example, as noted above, in cases of varied detector shapes, detectors with one or more broken pixels, single holograms, and/or stitched holograms, the one or more embodiments described herein can perform a successful reconstruction of a hologram, with the reconstruction having reduced artifacts relative to existing techniques. The embodiments disclosed herein thus can provide improvements to scientific instrument technology (e.g., improvements in the computer technology supporting such scientific instruments, among other improvements).

The systems and/or devices have been (and/or will be further) described herein with respect to interaction between one or more components. Such systems and/or components can include those components or sub-components specified therein, one or more of the specified components and/or sub-components, and/or additional components. Sub-components can be implemented as components communicatively coupled to other components rather than included within parent components. One or more components and/or sub-components can be combined into a single component providing aggregate functionality. The components can interact with one or more other components not specifically described herein for the sake of brevity, but known by those of skill in the art.

One or more embodiments described herein can be, in one or more embodiments, inherently and/or inextricably tied to computer technology and cannot be implemented outside of a computing environment. For example, one or more processes performed by one or more embodiments described herein can more efficiently, and even more feasibly, provide program and/or program instruction execution, such as relative to material analysis using holograms, as compared to existing systems and/or techniques using holograms. Systems, computer-implemented methods and/or computer program products providing performance of these processes are of great utility in the fields of material analysis, such as comprising use of electron energy holograms and cannot be equally practicably implemented in a sensible way outside of a computing environment.

One or more embodiments described herein can employ hardware and/or software to solve problems that are highly technical, that are not abstract, and that cannot be performed as a set of mental acts by a human. For example, a human, or even thousands of humans, cannot efficiently, accurately and/or effectively automatically expand a hologram and generate and/or apply an apodization filter to the resulting expanded hologram to subsequently generate a reconstructed target image having removed artifacts as the one or more embodiments described herein can provide this process. Moreover, neither can the human mind nor a human with pen and paper conduct one or more of these processes, as conducted by one or more embodiments described herein.

In one or more embodiments, one or more of the processes described herein can be performed by one or more specialized computers (e.g., a specialized processing unit, a specialized classical computer, a specialized quantum computer, a specialized hybrid classical/quantum system and/or another type of specialized computer) to execute defined tasks related to the one or more technologies describe above. One or more embodiments described herein and/or components thereof can be employed to solve new problems that arise through advancements in technologies mentioned above, employment of quantum computing systems, cloud computing systems, computer architecture and/or another technology.

One or more embodiments described herein can be fully operational towards performing one or more other functions (e.g., fully powered on, fully executed and/or another function) while also performing one or more of the one or more operations described herein.

To provide additional summary, a listing of embodiments and features thereof is next provided.

A system, comprising: a memory that stores computer executable components; and a processor that executes the computer executable components stored in the memory, wherein the computer executable components comprise: an obtaining component that obtains a signal of an energy-based initial hologram; an expansion component that expands the initial hologram at a boundary of the initial hologram, resulting in an expanded hologram having an expanded portion at the boundary; and a filter application component that, based on the expanded hologram, applies an apodization filter to overlap the expanded portion of the expanded hologram.

The system of the preceding paragraph, wherein the expansion component expands only a portion of the initial hologram disposed at the boundary.

The system of any preceding paragraph, wherein the filter application component applies the apodization filter to at least the expanded portion of the expanded hologram.

The system of any preceding paragraph, wherein the filter application component applies the apodization filter only to the expanded portion of the expanded hologram.

The system of any preceding paragraph, wherein the initial hologram comprises an aggregation of a plurality of holograms.

The system of any preceding paragraph, further comprising: a filter generation component that generates the apodization filter by copying pixels from a border of the initial hologram and applying those pixels external to the initial hologram, at the boundary, resulting in the expanded portion of the expanded hologram.

The system of any preceding paragraph, further comprising: a blurring component that blurs an internal area of the expanded hologram, internal to the boundary, prior to the application of the apodization filter by the filter application component.

The system of any preceding paragraph, wherein the blurring component progressively increases the blurring of the internal area at distances that are progressively increased from a center of the internal area.

The system of any preceding paragraph, wherein the obtaining component employs a detector having a broken pixel, and wherein application of the apodization filter by the filter application component is the same whether the detector has the broken pixel or does not have the broken pixel.

The system of any preceding paragraph, wherein the expansion of the initial hologram by the expansion component allows for propagation of artifacts into the expanded portion instead of reflection of the artifacts off the boundary and back into area of the initial hologram.

A computer-implemented method, comprising: obtaining, by a system operatively coupled to a processor, a signal of an energy-based initial hologram; expanding, by the system, the initial hologram at a boundary of the initial hologram, resulting in an expanded hologram having an expanded portion at the boundary; and based on the expanded hologram, applying an apodization filter to overlap the expanded portion of the expanded hologram.

The computer-implemented method of the preceding paragraph, further comprising: expanding, by the system, only a portion of the initial hologram disposed at the boundary.

The computer-implemented method of any preceding paragraph, further comprising: applying, by the system, the apodization filter only to the expanded portion of the expanded hologram.

The computer-implemented method of any preceding paragraph, further comprising: generating, by the system, the apodization filter by copying pixels from a border of the initial hologram and applying those pixels external to the initial hologram, at the boundary, resulting in the expanded portion of the expanded hologram.

The computer-implemented method of any preceding paragraph, further comprising: blurring, by the system, an internal area of the expanded hologram, internal to the boundary, prior to the application of the apodization filter.

The computer-implemented method of any preceding paragraph, further comprising: progressively increasing, by the system, the blurring of the internal area at distances that are progressively increased from a center of the internal area.

A computer program product facilitating a process for apodization of a hologram, the computer program product comprising a computer readable storage medium having program instructions embodied therewith, and the program instructions executable by a processor to cause the processor to: obtain, by the processor, a signal of an energy-based initial hologram; expand, by the processor, the initial hologram at a boundary of the initial hologram, resulting in an expanded hologram having an expanded portion at the boundary; and based on the expanded hologram, apply, by the processor, an apodization filter to overlap the expanded portion of the expanded hologram.

The computer program product of the preceding paragraph, wherein the program instructions are further executable by the processor to cause the processor to: generate, by the processor, the apodization filter by copying pixels from a border of the initial hologram and applying those pixels external to the initial hologram, at the boundary, resulting in the expanded portion of the expanded hologram.

The computer program product of any preceding paragraph, wherein the program instructions are further executable by the processor to cause the processor to: blur, by the processor, an internal area of the expanded hologram, internal to the boundary, prior to the application of the apodization filter.

The computer program product of any preceding paragraph, wherein the program instructions are further executable by the processor to cause the processor to: progressively increase, by the system, the blurring of the internal area at distances that are progressively increased from a center of the internal area.

### Scientific Instrument System Description

Turning next to FIG. 13, a detailed description is provided of additional context for the one or more embodiments described herein at FIGS. 1-12. One or more computing devices implementing any of the scientific instrument modules or methods disclosed herein can be part of a scientific instrument system. FIG. 13 illustrates a block diagram of an example scientific instrument system 1300 in which one or more of the scientific instrument methods or other methods disclosed herein can be performed, in accordance with various embodiments described herein. The scientific instrument modules and methods disclosed herein (e.g., the scientific instrument module 100 of FIG. 1 and the method 200 of FIG. 2) can be implemented by one or more of the scientific instrument 1310, the user local computing device 1320, the service local computing device 1330, and/or the remote computing device 1340 of the scientific instrument system 1300.

Any of the scientific instrument 1310, the user local computing device 1320, the service local computing device 1330, and/or the remote computing device 1340 can include any of the embodiments of the computing device 400 discussed herein with reference to FIG. 4, and any of the scientific instrument 1310, the user local computing device 1320, the service local computing device 1330, and/or the remote computing device 1340 can take the form of any appropriate one or more of the embodiments of the computing device 400 discussed herein with reference to FIG. 4.

One or more of the scientific instrument 1310, the user local computing device 1320, the service local computing device 1330, and/or the remote computing device 1340 can include a processing device 1302, a storage device 1304, and/or an interface device 1306. The processing device 1302 can take any suitable form, including the form of any of the processors 402 discussed herein with reference to FIG. 4. The processing devices 1302 included in different ones of the scientific instrument 1310, the user local computing device 1320, the service local computing device 1330, and/or the remote computing device 1340 can take the same form or different forms. The storage device 1304 can take any suitable form, including the form of any of the storage devices 404 discussed herein with reference to FIG. 4. The storage devices 1304 included in different ones of the scientific instrument 1310, the user local computing device 1320, the service local computing device 1330, and/or the remote computing device 1340 can take the same form or different forms. The interface device 1306 can take any suitable form, including the form of any of the interface devices 406 discussed herein with reference to FIG. 4. The interface devices 1306 included in different ones of the scientific instrument 1310, the user local computing device 1320, the service local computing device 1330, and/or the remote computing device 1340 can take the same form or different forms.

The scientific instrument 1310, the user local computing device 1320, the service local computing device 1330, and/or the remote computing device 1340 can be in communication with other elements of the scientific instrument system 1300 via communication pathways 1308. The communication pathways 1308 can communicatively couple the interface devices 1306 of different ones of the elements of the scientific instrument system 1300, as shown, and can be wired or wireless communication pathways (e.g., in accordance with any of the communication techniques discussed herein with reference to the interface devices 406 of the computing device 400 of FIG. 4). The particular scientific instrument system 1300 depicted in FIG. 13 includes communication pathways between each pair of the scientific instrument 1310, the user local computing device 1320, the service local computing device 1330, and the remote computing device 1340, but this "fully connected" implementation is simply illustrative, and in various embodiments, various ones of the communication pathways 1308 can be omitted. For example, in one or more embodiments, a service local computing device 1330 can omit a direct communication pathway 1308 between its interface device 1306 and the interface device 1306 of the scientific instrument 1310, but can instead communicate with the scientific instrument 1310 via the communication pathway 1308 between the service local computing device 1330 and the user local computing device 1320 and/or the communication pathway 1308 between the user local computing device 1320 and the scientific instrument 1310.

The scientific instrument 1310 can include any appropriate scientific instrument, such as a separation or MS instrument, or other instrument facilitating material analysis.

The user local computing device 1320 can be a computing device (e.g., in accordance with any of the embodiments of the computing device 400 discussed herein) that is local to a user of the scientific instrument 1310. In one or more embodiments, the user local computing device 1320 can also be local to the scientific instrument 1310, but this need not be the case; for example, a user local computing device 1320 that is associated with a home, office or other building associated with a user entity can be remote from, but in communication with, the scientific instrument 1310 so that the user entity can use the user local computing device 1320 to control and/or access data from the scientific instrument 1310. In one or more embodiments, the user local computing device 1320 can be a laptop, smartphone, or tablet device. In one or more embodiments the user local computing device 1320 can be a portable computing device. In one or more embodiments, the user local computing device 1320 can deployed in the field.

The service local computing device 1330 can be a computing device (e.g., in accordance with any of the embodiments of the computing device 400 discussed herein) that is local to an entity that services the scientific instrument 1310. For example, the service local computing device 1330 can be local to a manufacturer of the scientific instrument 1310 or to a third-party service company. In one or more embodiments, the service local computing device 1330 can communicate with the scientific instrument 1310, the user local computing device 1320, and/or the remote computing device 1340 (e.g., via a direct communication pathway 1308 or via multiple "indirect" communication pathways 1308, as discussed above) to receive data regarding the operation of the scientific instrument 1310, the user local computing device 1320, and/or the remote computing device 1340 (e.g., the results of self-tests of the scientific instrument 1310, calibration coefficients used by the scientific instrument 1310, the measurements of sensors associated with the scientific instrument 1310, etc.). In one or more embodiments, the service local computing device 1330 can communicate with the scientific instrument 1310, the user local computing device 1320, and/or the remote computing device 1340 (e.g., via a direct communication pathway 1308 or via multiple "indirect" communication pathways 1308, as discussed above) to transmit data to the scientific instrument 1310, the user local computing device 1320, and/or the remote computing device 1340 (e.g., to update programmed instructions, such as firmware, in the scientific instrument 1310, to initiate the performance of test or calibration sequences in the scientific instrument 1310, to update programmed instructions, such as software, in the user local computing device 1320 or the remote computing device 1340, etc.). A user entity of the scientific instrument 1310 can utilize the scientific instrument 1310 or the user local computing device 1320 to communicate with the service local computing device 1330 to report a problem with the scientific instrument 1310 or the user local computing device 1320, to request a visit from a technician to improve the operation of the scientific instrument 1310, to order consumables or replacement parts associated with the scientific instrument 1310, or for other purposes.

The remote computing device 1340 can be a computing device (e.g., in accordance with any of the embodiments of the computing device 400 discussed herein) that is remote from the scientific instrument 1310 and/or from the user local computing device 1320. In one or more embodiments, the remote computing device 1340 can be included in a datacenter or other large-scale server environment. In one or more embodiments, the remote computing device 1340 can include network-attached storage (e.g., as part of the storage device 1304). The remote computing device 1340 can store data generated by the scientific instrument 1310, perform analyses of the data generated by the scientific instrument 1310 (e.g., in accordance with programmed instructions), facilitate communication between the user local computing device 1320 and the scientific instrument 1310, and/or facilitate communication between the service local computing device 1330 and the scientific instrument 1310.

In one or more embodiments, one or more of the elements of the scientific instrument system 1300 illustrated in FIG. 13 can be omitted. Further, in one or more embodiments, multiple ones of various ones of the elements of the scientific instrument system 1300 of FIG. 13 can be present. For example, a scientific instrument system 1300 can include multiple user local computing devices 1320 (e.g., different user local computing devices 1320 associated with different user entities or in different locations). In another example, a scientific instrument system 1300 can include multiple scientific instruments 1310, all in communication with service local computing device 1330 and/or a remote computing device 1340; in such an embodiment, the service local computing device 1330 can monitor these multiple scientific instruments 1310, and the service local computing device 1330 can cause updates or other information can be "broadcast" to multiple scientific instruments 1310 at the same time. Different ones of the scientific instruments 1310 in a scientific instrument system 1300 can be located close to one another (e.g., in the same room) or farther from one another (e.g., on different floors of a building, in different buildings, in different cities, etc.). In one or more embodiments, a scientific instrument 1310 can be connected to an Internet-of-Things (IoT) stack that allows for command and control of the scientific instrument 1310 through a web-based application, a virtual or augmented reality application, a mobile application, and/or a desktop application. Any of these applications can be accessed by a user entity operating the user local computing device 1320 in communication with the scientific instrument 1310 by the intervening remote computing device 1340. In one or more embodiments, a scientific instrument 1310 can be sold by the manufacturer along with one or more associated user local computing devices 1320 as part of a local scientific instrument computing unit 1312.

In one or more embodiments, different ones of the scientific instruments 1310 included in a scientific instrument system 1300 can be different types of scientific instruments 1310; for example, one scientific instrument 1310 can be an EDS device, while another scientific instrument 1310 can be an analysis device that analyzes results of an EDS device. In some such embodiments, the remote computing device 1340 and/or the user local computing device 1320 can combine data from different types of scientific instruments 1310 included in a scientific instrument system 1300.

### Example Operating Environment

FIG. 14 is a schematic block diagram of an operating environment 1400 with which the described subject matter can interact. The operating environment 1400 comprises one or more remote component(s) 1410. The remote component(s) 1410 can be hardware and/or software (e.g., threads, processes, computing devices). In one or more embodiments, remote component(s) 1410 can be a distributed computer system, connected to a local automatic scaling component and/or programs that use the resources of a distributed computer system, via communication framework 1440. Communication framework 1440 can comprise wired network devices, wireless network devices, mobile devices, wearable devices, radio access network devices, gateway devices, femtocell devices, servers, etc.

The operating environment 1400 also comprises one or more local component(s) 1420. The local component(s) 1420 can be hardware and/or software (e.g., threads, processes, computing devices). In one or more embodiments, local component(s) 1420 can comprise an automatic scaling component and/or programs that communicate/use the remote resources 1410 and 1420, etc., connected to a remotely located distributed computing system via communication framework 1440.

One possible communication between a remote component(s) 1410 and a local component(s) 1420 can be in the form of a data packet adapted to be transmitted between two or more computer processes. Another possible communication between a remote component(s) 1410 and a local component(s) 1420 can be in the form of circuit-switched data adapted to be transmitted between two or more computer processes in radio time slots. The operating environment 1400 comprises a communication framework 1440 that can be employed to facilitate communications between the remote component(s) 1410 and the local component(s) 1420, and can comprise an air interface, e.g., interface of a UMTS network, via an LTE network, etc. Remote component(s) 1410 can be operably connected to one or more remote data store(s) 1450, such as a hard drive, solid state drive, subscriber identity module (SIM) card, electronic SIM (eSIM), device memory, etc., that can be employed to store information on the remote component(s) 1410 side of communication framework 1440. Similarly, local component(s) 1420 can be operably connected to one or more local data store(s) 1430, that can be employed to store information on the local component(s) 1420 side of communication framework 1440.

### Example Computing Environment

In order to provide additional context for various embodiments described herein, FIG. 15 and the following discussion are intended to provide a brief, general description of a suitable computing environment 1500 in which the various embodiments of the embodiment described herein can be implemented. While the embodiments have been described above in the general context of computer-executable instructions that can run on one or more computers, those skilled in the art will recognize that the embodiments can be also implemented in combination with other program modules and/or as a combination of hardware and software.

Generally, program modules include routines, programs, components, data structures, etc., that perform tasks or implement abstract data types. Moreover, the methods can be practiced with other computer system configurations, including single-processor or multiprocessor computer systems, minicomputers, mainframe computers, Internet of Things (IoT) devices, distributed computing systems, as well as personal computers, hand-held computing devices, microprocessor-based or programmable consumer electronics, and the like, each of which can be operatively coupled to one or more associated devices.

The illustrated embodiments of the embodiments herein can also be practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, and/or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data, or unstructured data.

Computer-readable storage media can include, but are not limited to, random access memory (RAM), read only memory (ROM), electrically erasable programmable read only memory (EEPROM), flash memory or other memory technology, compact disk read only memory (CD ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible and/or non-transitory media which can be used to store desired information. In this regard, the terms "tangible" or "non-transitory" herein as applied to storage, memory, or computer-readable media, exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries, or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

Referring still to FIG. 15, the example computing environment 1500 which can implement one or more embodiments described herein includes a computer 1502, the computer 1502 including a processing unit 1504, a system memory 1506 and a system bus 1508. The system bus 1508 couples system components including, but not limited to, the system memory 1506 to the processing unit 1504. The processing unit 1504 can be any of various commercially available processors. Dual microprocessors and other multi processor architectures can also be employed as the processing unit 1504.

The system bus 1508 can be any of several types of bus structure that can further interconnect to a memory bus (with or without a memory controller), a peripheral bus, and a local bus using any of a variety of commercially available bus architectures. The system memory 1506 includes ROM 1510 and RAM 1512. A basic input/output system (BIOS) can be stored in a non-volatile memory such as ROM, erasable programmable read only memory (EPROM), EEPROM, which BIOS contains the basic routines that help to transfer information between elements within the computer 1502, such as during startup. The RAM 1512 can also include a high-speed RAM such as static RAM for caching data.

The computer 1502 further includes an internal hard disk drive (HDD) 1514 (e.g., EIDE, SATA), and can include one or more external storage devices 1516 (e.g., a magnetic floppy disk drive (FDD) 1516, a memory stick or flash drive reader, a memory card reader, etc.). While the internal HDD 1514 is illustrated as located within the computer 1502, the internal HDD 1514 can also be configured for external use in a suitable chassis (not shown). Additionally, while not shown in computing environment 1500, a solid-state drive (SSD) could be used in addition to, or in place of, an HDD 1514.

Other internal or external storage can include at least one other storage device 1520 with storage media 1522 (e.g., a solid-state storage device, a nonvolatile memory device, and/or an optical disk drive that can read or write from removable media such as a CD-ROM disc, a DVD, a BD, etc.). The external storage 1516 can be facilitated by a network virtual machine. The HDD 1514, external storage device 1516 and storage device (e.g., drive) 1520 can be connected to the system bus 1508 by an HDD interface 1524, an external storage interface 1526 and a drive interface 1528, respectively.

The drives and their associated computer-readable storage media provide nonvolatile storage of data, data structures, computer-executable instructions, and so forth. For the computer 1502, the drives and storage media accommodate the storage of any data in a suitable digital format. Although the description of computer-readable storage media above refers to respective types of storage devices, other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 1512, including an operating system 1530, one or more application programs 1532, other program modules 1534 and program data 1536. All or portions of the operating system, applications, modules, and/or data can also be cached in the RAM 1512. The systems and methods described herein can be implemented utilizing various commercially available operating systems or combinations of operating systems.

Computer 1502 can optionally comprise emulation technologies. For example, a hypervisor (not shown) or other intermediary can emulate a hardware environment for operating system 1530, and the emulated hardware can optionally be different from the hardware illustrated in FIG. 15. In such an embodiment, operating system 1530 can comprise one virtual machine (VM) of multiple VMs hosted at computer 1502. Furthermore, operating system 1530 can provide runtime environments, such as the Java runtime environment or the .NET framework, for applications 1532. Runtime environments are consistent execution environments that allow applications 1532 to run on any operating system that includes the runtime environment. Similarly, operating system 1530 can support containers, and applications 1532 can be in the form of containers, which are lightweight, standalone, executable packages of software that include, e.g., code, runtime, system tools, system libraries and settings for an application.

Further, computer 1502 can be enabled with a security module, such as a trusted processing module (TPM). For instance, with a TPM, boot components hash next in time boot components, and wait for a match of results to secured values, before loading a next boot component. This process can take place at any layer in the code execution stack of computer 1502, e.g., applied at the application execution level or at the operating system (OS) kernel level, thereby enabling security at any level of code execution.

A user entity can enter commands and information into the computer 1502 through one or more wired/wireless input devices, e.g., a keyboard 1538, a touch screen 1540, and a pointing device, such as a mouse 1542. Other input devices (not shown) can include a microphone, an infrared (IR) remote control, a radio frequency (RF) remote control, or other remote control, a joystick, a virtual reality controller and/or virtual reality headset, a game pad, a stylus pen, an image input device, e.g., camera, a gesture sensor input device, a vision movement sensor input device, an emotion or facial detection device, a biometric input device, e.g., fingerprint or iris scanner, or the like. These and other input devices are often connected to the processing unit 1504 through an input device interface 1544 that can be coupled to the system bus 1508, but can be connected by other interfaces, such as a parallel port, an IEEE 1394 serial port, a game port, a USB port, an IR interface, a BLUETOOTHO interface, etc.

A monitor 1546 or other type of display device can also be connected to the system bus 1508 via an interface, such as a video adapter 1548. In addition to the monitor 1546, a computer typically includes other peripheral output devices (not shown), such as speakers, printers, etc.

The computer 1502 can operate in a networked environment using logical connections via wired and/or wireless communications to one or more remote computers, such as a remote computer 1550. The remote computer 1550 can be a workstation, a server computer, a router, a personal computer, portable computer, microprocessor-based entertainment appliance, a peer device or other common network node, and typically includes many or all of the elements described relative to the computer 1502, although, for purposes of brevity, only a memory/storage device 1552 is illustrated. The logical connections depicted include wired/wireless connectivity to a local area network (LAN) 1554 and/or larger networks, e.g., a wide area network (WAN) 1556. Such LAN and WAN networking environments are commonplace in offices and companies, and facilitate enterprise-wide computer networks, such as intranets, all of which can connect to a global communications network, e.g., the Internet.

When used in a LAN networking environment, the computer 1502 can be connected to the local network 1554 through a wired and/or wireless communication network interface or adapter 1558. The adapter 1558 can facilitate wired or wireless communication to the LAN 1554, which can also include a wireless access point (AP) disposed thereon for communicating with the adapter 1558 in a wireless mode.

When used in a WAN networking environment, the computer 1502 can include a modem 1560 or can be connected to a communications server on the WAN 1556 via other means for establishing communications over the WAN 1556, such as by way of the Internet. The modem 1560, which can be internal or external and a wired or wireless device, can be connected to the system bus 1508 via the input device interface 1544. In a networked environment, program modules depicted relative to the computer 1502 or portions thereof, can be stored in the remote memory/storage device 1552. The network connections shown are example and other means of establishing a communications link between the computers can be used.

When used in either a LAN or WAN networking environment, the computer 1502 can access cloud storage systems or other network-based storage systems in addition to, or in place of, external storage devices 1516 as described above. Generally, a connection between the computer 1502 and a cloud storage system can be established over a LAN 1554 or WAN 1556 e.g., by the adapter 1558 or modem 1560, respectively. Upon connecting the computer 1502 to an associated cloud storage system, the external storage interface 1526 can, with the aid of the adapter 1558 and/or modem 1560, manage storage provided by the cloud storage system as it would other types of external storage. For instance, the external storage interface 1526 can be configured to provide access to cloud storage sources as if those sources were physically connected to the computer 1502.

The computer 1502 can be operable to communicate with any wireless devices or entities operatively disposed in wireless communication, e.g., a printer, scanner, desktop and/or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a defined structure as with an existing network or simply an ad hoc communication between at least two devices.

### Additional Information

The embodiments described herein can be directed to one or more of a system, a method, an apparatus and/or a computer program product at any possible technical detail level of integration. The computer program product can include a computer readable storage medium (or media) having computer readable program instructions thereon for causing a processor to carry out aspects of the one or more embodiments described herein. The computer readable storage medium can be a tangible device that can retain and store instructions for use by an instruction execution device. The computer readable storage medium can be, for example, but is not limited to, an electronic storage device, a magnetic storage device, an optical storage device, an electromagnetic storage device, a superconducting storage device and/or any suitable combination of the foregoing. A non-exhaustive list of more specific examples of the computer readable storage medium can also include the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon and/or any suitable combination of the foregoing. A computer readable storage medium, as used herein, is not to be construed as being transitory signals per se, such as radio waves and/or other freely propagating electromagnetic waves, electromagnetic waves propagating through a waveguide and/or other transmission media (e.g., light pulses passing through a fiber-optic cable), and/or electrical signals transmitted through a wire.

Computer readable program instructions described herein can be downloaded to respective computing/processing devices from a computer readable storage medium and/or to an external computer or external storage device via a network, for example, the Internet, a local area network, a wide area network and/or a wireless network. The network can comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device. Computer readable program instructions for carrying out operations of the one or more embodiments described herein can be assembler instructions, instruction-set-architecture (ISA) instructions, machine instructions, machine dependent instructions, microcode, firmware instructions, state-setting data, configuration data for integrated circuitry, and/or source code and/or object code written in any combination of one or more programming languages, including an object oriented programming language such as Smalltalk, C++ or the like, and/or procedural programming languages, such as the "C" programming language and/or similar programming languages. The computer readable program instructions can execute entirely on a computer, partly on a computer, as a stand-alone software package, partly on a computer and/or partly on a remote computer or entirely on the remote computer and/or server. In the latter scenario, the remote computer can be connected to a computer through any type of network, including a local area network (LAN) and/or a wide area network (WAN), and/or the connection can be made to an external computer (for example, through the Internet using an Internet Service Provider). In one or more embodiments, electronic circuitry including, for example, programmable logic circuitry, field-programmable gate arrays (FPGA) and/or programmable logic arrays (PLA) can execute the computer readable program instructions by utilizing state information of the computer readable program instructions to personalize the electronic circuitry, in order to perform aspects of the one or more embodiments described herein.

Aspects of the one or more embodiments described herein are described with reference to flowchart illustrations and/or block diagrams of methods, apparatus (systems), and computer program products according to one or more embodiments described herein. It will be understood that each block of the flowchart illustrations and/or block diagrams, and combinations of blocks in the flowchart illustrations and/or block diagrams, can be implemented by computer readable program instructions. These computer readable program instructions can be provided to a processor of a general-purpose computer, special purpose computer and/or other programmable data processing apparatus to produce a machine, such that the instructions, which execute via the processor of the computer or other programmable data processing apparatus, can create means for implementing the functions/acts specified in the flowchart and/or block diagram block or blocks. These computer readable program instructions can also be stored in a computer readable storage medium that can direct a computer, a programmable data processing apparatus and/or other devices to function in a particular manner, such that the computer readable storage medium having instructions stored therein can comprise an article of manufacture including instructions which can implement aspects of the function/act specified in the flowchart and/or block diagram block or blocks. The computer readable program instructions can also be loaded onto a computer, other programmable data processing apparatus and/or other device to cause a series of operational acts to be performed on the computer, other programmable apparatus and/or other device to produce a computer implemented process, such that the instructions which execute on the computer, other programmable apparatus and/or other device implement the functions/acts specified in the flowchart and/or block diagram block or blocks.

The flowcharts and block diagrams in the figures illustrate the architecture, functionality and/or operation of possible implementations of systems, computer-implementable methods and/or computer program products according to one or more embodiments described herein. In this regard, each block in the flowchart or block diagrams can represent a module, segment and/or portion of instructions, which comprises one or more executable instructions for implementing the specified logical function. In one or more alternative implementations, the functions noted in the blocks can occur out of the order noted in the Figures. For example, two blocks shown in succession can be executed substantially concurrently, and/or the blocks can sometimes be executed in the reverse order, depending upon the functionality involved. It will also be noted that each block of the block diagrams and/or flowchart illustration, and/or combinations of blocks in the block diagrams and/or flowchart illustration, can be implemented by special purpose hardware-based systems that can perform the specified functions and/or acts and/or carry out one or more combinations of special purpose hardware and/or computer instructions.

While the subject matter has been described above in the general context of computer-executable instructions of a computer program product that runs on a computer and/or computers, those skilled in the art will recognize that the one or more embodiments herein also can be implemented at least partially in parallel with one or more other program modules. Generally, program modules include routines, programs, components and/or data structures that perform particular tasks and/or implement particular abstract data types. Moreover, the aforedescribed computer-implemented methods can be practiced with other computer system configurations, including single-processor and/or multiprocessor computer systems, mini-computing devices, mainframe computers, as well as computers, hand-held computing devices (e.g., PDA, phone), and/or microprocessor-based or programmable consumer and/or industrial electronics. The illustrated aspects can also be practiced in distributed computing environments in which tasks are performed by remote processing devices that are linked through a communications network. However, one or more, if not all aspects of the one or more embodiments described herein can be practiced on stand-alone computers. In a distributed computing environment, program modules can be located in both local and remote memory storage devices.

As used in this application, the terms "component," "system," "platform" and/or "interface" can refer to and/or can include a computer-related entity or an entity related to an operational machine with one or more specific functionalities. The entities described herein can be either hardware, a combination of hardware and software, software, or software in execution. For example, a component can be, but is not limited to being, a process running on a processor, a processor, an object, an executable, a thread of execution, a program and/or a computer. By way of illustration, both an application running on a server and the server can be a component. One or more components can reside within a process and/or thread of execution and a component can be localized on one computer and/or distributed between two or more computers. In another example, respective components can execute from various computer readable media having various data structures stored thereon. The components can communicate via local and/or remote processes such as in accordance with a signal having one or more data packets (e.g., data from one component interacting with another component in a local system, distributed system and/or across a network such as the Internet with other systems via the signal). As another example, a component can be an apparatus with specific functionality provided by mechanical parts operated by electric or electronic circuitry, which is operated by a software and/or firmware application executed by a processor. In such a case, the processor can be internal and/or external to the apparatus and can execute at least a part of the software and/or firmware application. As yet another example, a component can be an apparatus that provides specific functionality through electronic components without mechanical parts, where the electronic components can include a processor and/or other means to execute software and/or firmware that confers at least in part the functionality of the electronic components. In an aspect, a component can emulate an electronic component via a virtual machine, e.g., within a cloud computing system.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Moreover, articles "a" and "an" as used in the subject specification and annexed drawings should generally be construed to mean "one or more" unless specified otherwise or clear from context to be directed to a singular form. As used herein, the terms "example" and/or "exemplary" are utilized to mean serving as an example, instance, or illustration. For the avoidance of doubt, the subject matter described herein is not limited by such examples. In addition, any aspect or design described herein as an "example" and/or "exemplary" is not necessarily to be construed as preferred or advantageous over other aspects or designs, nor is it meant to preclude equivalent exemplary structures and techniques known to those of ordinary skill in the art.

As it is employed in the subject specification, the term "processor" can refer to substantially any computing processing unit and/or device comprising, but not limited to, single-core processors; single-processors with software multithread execution capability; multi-core processors; multi-core processors with software multithread execution capability; multi-core processors with hardware multithread technology; parallel platforms; and/or parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, and/or any combination thereof designed to perform the functions described herein. Further, processors can exploit nano-scale architectures such as, but not limited to, molecular and quantum-dot based transistors, switches and/or gates, in order to optimize space usage and/or to enhance performance of related equipment. A processor can be implemented as a combination of computing processing units.

Herein, terms such as "store," "storage," "data store," data storage," "database," and substantially any other information storage component relevant to operation and functionality of a component are utilized to refer to "memory components," entities embodied in a "memory," or components comprising a memory. Memory and/or memory components described herein can be either volatile memory or nonvolatile memory or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), flash memory and/or nonvolatile random-access memory (RAM) (e.g., ferroelectric RAM (FeRAM). Volatile memory can include RAM, which can act as external cache memory, for example. By way of illustration and not limitation, RAM can be available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM) and/or Rambus dynamic RAM (RDRAM). Additionally, the described memory components of systems and/or computer-implemented methods herein are intended to include, without being limited to including, these and/or any other suitable types of memory.

What has been described above includes mere examples of systems and computer-implemented methods. It is, of course, not possible to describe every conceivable combination of components and/or computer-implemented methods for purposes of describing the one or more embodiments, but one of ordinary skill in the art can recognize that many further combinations and/or permutations of the one or more embodiments are possible. Furthermore, to the extent that the terms "includes," "has," "possesses," and the like are used in the detailed description, claims, appendices and/or drawings such terms are intended to be inclusive in a manner similar to the term "comprising" as "comprising" is interpreted when employed as a transitional word in a claim.

The descriptions of the various embodiments can use the phrases "an embodiment," "various embodiments," "one or more embodiments" and/or "some embodiments," each of which can refer to one or more of the same or different embodiments.

The descriptions of the various embodiments have been presented for purposes of illustration but are not intended to be exhaustive or limited to the embodiments described herein. Many modifications and variations will be apparent to those of ordinary skill in the art without departing from the scope and spirit of the described embodiments. The terminology used herein was chosen to best explain the principles of the embodiments, the practical application and/or technical improvement over technologies found in the marketplace, and/or to enable others of ordinary skill in the art to understand the embodiments described herein.

## Claims

1. A system, comprising:
a memory that stores computer executable components; and
a processor that executes the computer executable components stored in the memory, wherein the computer executable components comprise:
an obtaining component that obtains a signal of an energy-based initial hologram;
an expansion component that expands the initial hologram at a boundary of the initial hologram, resulting in an expanded hologram having an expanded portion at the boundary; and
a filter application component that, based on the expanded hologram, applies an apodization filter to overlap the expanded portion of the expanded hologram.

2. The system of claim 1, wherein the expansion component expands only a portion of the initial hologram disposed at the boundary.

3. The system of any of the preceding claims, wherein the filter application component applies the apodization filter to at least the expanded portion of the expanded hologram or only to the expanded portion of the expanded hologram.

4. The system of any of the preceding claims, wherein the initial hologram comprises an aggregation of a plurality of holograms.

5. The system of any of the preceding claims, further comprising:
a filter generation component that generates the apodization filter by copying pixels from a border of the initial hologram and applying those pixels external to the initial hologram, at the boundary, resulting in the expanded portion of the expanded hologram.

6. The system of any of the preceding claims, further comprising:
a blurring component that blurs an internal area of the expanded hologram, internal to the boundary, prior to the application of the apodization filter by the filter application component.

7. The system of claim 6, wherein the blurring component progressively increases the blurring of the internal area at distances that are progressively increased from a center of the internal area.

8. The system of any of the preceding claims, wherein the obtaining component employs a detector having a broken pixel, and wherein application of the apodization filter by the filter application component is the same whether the detector has the broken pixel or does not have the broken pixel.

9. The system of any of the preceding claims, wherein the expansion of the initial hologram by the expansion component allows for propagation of artifacts into the expanded portion instead of reflection of the artifacts off the boundary and back into area of the initial hologram.

10. A computer-implemented method, comprising:
obtaining, by a system operatively coupled to a processor, a signal of an energy-based initial hologram;
expanding, by the system, the initial hologram at a boundary of the initial hologram, resulting in an expanded hologram having an expanded portion at the boundary; and
based on the expanded hologram, applying an apodization filter to overlap the expanded portion of the expanded hologram.

11. The computer-implemented method of claim 10, further comprising:
expanding, by the system, only a portion of the initial hologram disposed at the boundary.

12. The computer-implemented method of any of the claims 10 - 11, further comprising:
applying, by the system, the apodization filter only to the expanded portion of the expanded hologram.

13. The computer-implemented method of any of the claims 10 - 12, further comprising:
generating, by the system, the apodization filter by copying pixels from a border of the initial hologram and applying those pixels external to the initial hologram, at the boundary, resulting in the expanded portion of the expanded hologram.

14. The computer-implemented method of any of the claims 10 - 13, further comprising:
blurring, by the system, an internal area of the expanded hologram, internal to the boundary, prior to the application of the apodization filter.

15. A computer program product comprising instructions, when executed by a system and any of its components according to any of the claims 1 - 9, to perform the method according to any of the claims 10 - 14.
